# EUROPÄISCHE PATENTSCHRIFT

(11) **EP 0 374 758 B1**
(45) Veröffentlichungstag und Bekanntmachung des Hinweises auf die Patenterteilung: **31.05.1995**
(21) Anmeldenummer: 89123245.6
(22) Anmeldetag: 15.12.1989
(51) Int. Cl.: C09B 62/513, C09B 62/09, D06P 1/38

(54) **Wasserlösliche Farbstoffe, Verfahren zu ihrer Herstellung und ihre Verwendung**
Water soluble dyes, methods for their preparation and their use
Colorants solubles dans l'eau, procédés de leur fabrication et leur application

(30) Priorität: 21.12.1988 DE 3843014
(43) Veröffentlichungstag der Anmeldung: 27.06.1990
(73) Patentinhaber: HOECHST AKTIENGESELLSCHAFT, 65926 Frankfurt am Main (DE)
(72) Erfinder: Tappe, Horst, Dr., D-6057 Dietzenbach (DE); Oehme, Dieter, D-6093 Flörsheim am Main (DE); Büch, Holger Michael, Dr., D-6238 Hofheim am Taunus (DE); Russ, Werner Hubert, Dr., Warwick, RI 02886 (US)

(56) Entgegenhaltungen:
- EP-A- 0 048 355
- DE-A- 2 614 550

## Beschreibung

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Zwar sind bereits Reaktivfarbstoffe in großer Zahl bekannt, wie bspw. aus den europäischen Patentanmeldungs-Veröffentlichungen Nrs. 0 048 355A, 0 094 055A, 0 141 367A und 0 144 766A sowie der Deutschen Offenlegungsschrift Nr. 2 614 550, jedoch besteht weiterhin ein Bedarf nach neuen Reaktivfarbstoffen, die verbesserte Eigenschaften, insbesondere in Bezug auf die Applikation, aufweisen. Für das Färben von Baumwolle nach dem Kaltverweilverfahren werden heute Reaktivfarbstoffe gefordert, die eine der niedrigen Färbetemperatur angepaßte Substantivität haben und die zugleich eine gute Auswaschbarkeit der nicht fixierten Anteile aufweisen. Sie sollen ferner eine hohe Reaktivität besitzen, so daß nur kurze Verweilzeiten erforderlich sind, und sie sollen insbesondere Färbungen mit hohen Fixiergraden liefern. Von bekannten Farbstoffen, wie sie beispielsweise in der europäischen Patentschrift Nr. 0 076 782 B1 beschrieben sind, werden diese Anforderungen nur in ungenügendem Maße erfüllt.

Der vorliegenden Erfindung lag daher die Aufgabe zugrunde, neue, verbesserte Reaktivfarbstoffe zu finden. Sie sollten sich vor allem durch hohe Fixierausbeuten und hohe Faser-Farbstoff-Bindungsstabilitäten und eine leichte Auswaschbarkeit der nicht fixierten Anteile und eine geringe Empfindlichkeit gegen Färbeparameter, wie Färbezeit und Färbetemperaturen im Bereich von 40 bis 80°C, auszeichnen.

Mit der vorliegenden Erfindung wurde diese Aufgabe durch Auffindung von Farbstoffen der allgemeinen Formeln (3c-1), (3c-2), (5a) und (5c) gelöst.

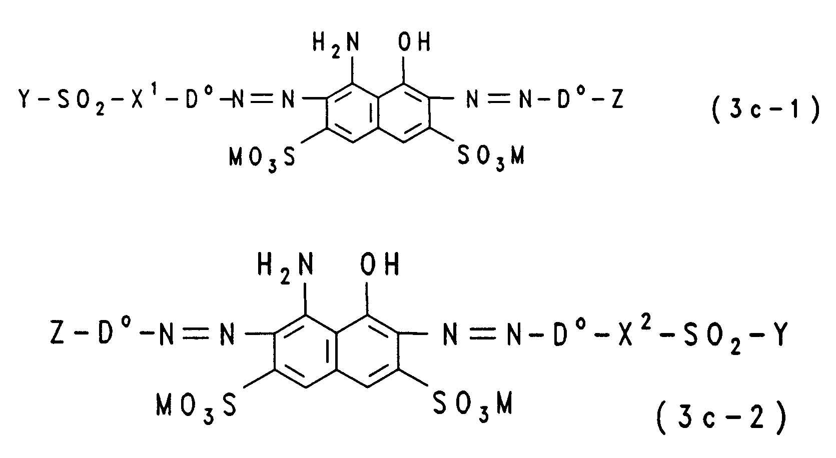

Y-SO₂-X¹-D¹-N=N-E¹-N=N-K*-Z (5a)

Z-D*-N=N-E¹-N=N-K¹-X²-SO₂-Y (5c)

In diesen Formeln bedeuten:
- Y: ist die Vinylgruppe oder eine β-Sulfatoethyl-, β-Halogenethyl-, wie β-Chlorethyl- oder β-Bromethyl-, eine β-Thiosulfatoethyl-, β-Phosphatoethyl- oder β-Acetoxyethyl-Gruppe, bevorzugt eine Vinylgruppe oder insbesondere bevorzugt eine β-Chlorethyl-Gruppe oder β-Sulfatoethyl-Gruppe;
- Z: ist ein Rest der allgemeinen Formel (4) 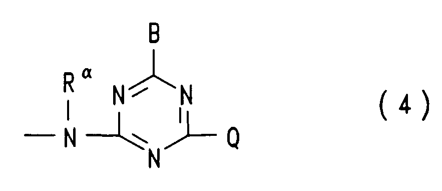 in welcher bedeuten:
- R^{α}: ist ein Wasserstoffatom oder eine geradkettige oder verzweigte Alkylgruppe von 1 bis 4 C-Atomen, die durch eine Carboxy-, Sulfo-, Cyano- oder Hydroxygruppe oder durch ein Chloratom substituiert sein kann, bevorzugt die Methyl- und die Ethylgruppe und insbesondere bevorzugt ein Wasserstoffatom;
- B: ist Fluor, Chlor, Brom, Alkylsulfonyl von 1 bis 4 C-Atomen, Phenylsulfonyl, Methoxy oder Sulfo, bevorzugt Fluor oder Chlor;
- Q: ist eine Gruppe der allgemeinen Formel (2a) oder (2b) 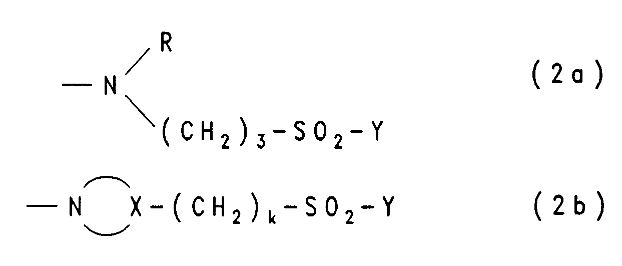 in welchen
- R: ein Wasserstoffatom oder eine Alkylgruppe von 1 bis 4 C-Atomen ist,
- Y: eine der obengenannten Bedeutungen hat,
- k: für die Zahl Null, 1, 2, 3 oder 4 steht und
- X: zusammen mit dem N-Atom und 1 oder 2 Alkylengruppen von 1 bis 5 C-Atomen und gegebenenfalls 1 oder 2 Heteroatomen, wie Stickstoff- und Sauerstoffatomen, den bivalenten Rest eines bestehenden heterocyclischen Ringes bildet, wie beispielsweise den Piperazin-1,4-ylen- oder einen Piperidinylen-Rest;
- M: ist ein Wasserstoffatom oder bevorzugt ein Alkalimetall, wie Natrium, Kalium oder Lithium;
- X¹: ist eine direkte Bindung oder eine Alkylengruppe von 1 bis 4 C-Atomen oder der bivalente Rest einer Alkanoylamido-Gruppe von 2 bis 5 C-Atomen und ist bevorzugt eine Gruppe der Formel -(CH₂)₃-CO-NH- und insbesondere bevorzugt eine direkte Bindung;
- X²: hat eine der für X¹ angegebenen Bedeutungen und ist bevorzugt eine Gruppe der Formel -NH-CO-(CH₂)₃- und insbesondere bevorzugt eine direkte Bindung;
- D^{o}: ist ein Rest der allgemeinen Formel (6a), (6b) oder (6c) 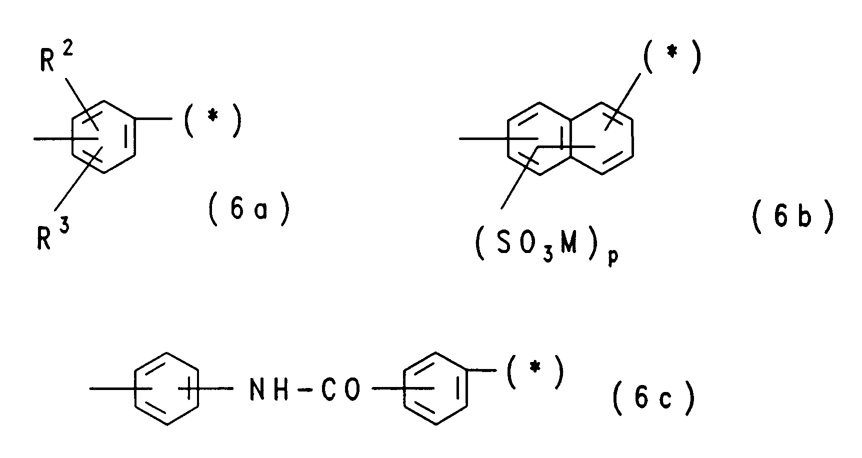 in welchen
die mit (*) versehene Bindung zur Azogruppe führt,
- R²: Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-(C₁-C₄-Alkyl)-carbamoyl, Fluor, Chlor, Brom oder Trifluormethyl ist,
- R³: Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-(C₁-C₄-Alkyl)-carbamoyl, Fluor, Chlor, Nitro, Sulfamoyl, N-(C₁-C₄-Alkyl)-sulfamoyl, Alkylsulfonyl von 1 bis 4 C-Atomen, Phenylsulfonyl oder Phenoxy ist,
- p: die Zahl Null, 1 oder 2 bedeutet (wobei diese Gruppe im Falle von p gleich Null ein Wasserstoffatom bedeutet) und
- M: die obengenannte Bedeutung hat;
- D¹: ist ein Phenylenrest, der die oben genannten und definierten Substituenten R² und R³ besitzt, oder ist ein Naphthylenrest, der durch 1 oder 2 Sulfogruppen substituiert sein kann;
- E¹: ist ein Rest der allgemeinen Formel (7a), (7b), (7c) oder (7d) 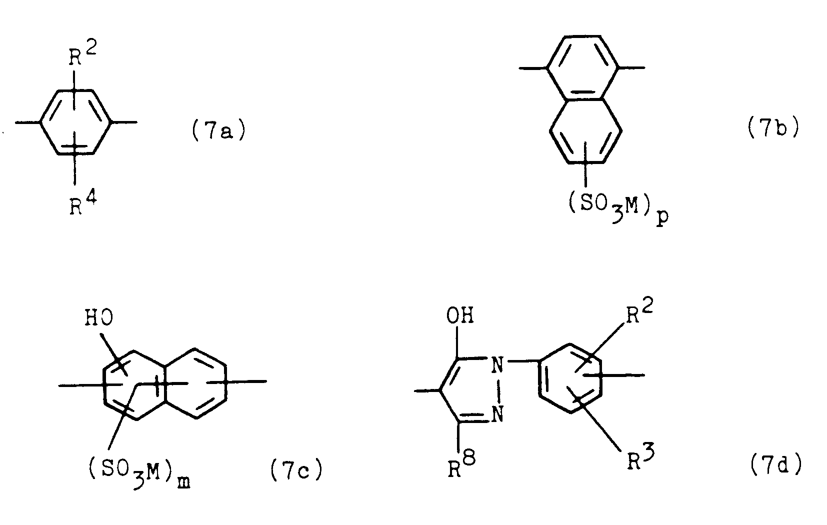 in welchen
- R², R³, M und p: die oben angegebenen Bedeutungen haben,
- R⁴: ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine N′-Phenylureidogruppe, eine N′-Alkyl-ureidogruppe mit 1 bis 4 C-Atomen im Alkylrest, eine Phenylsulfonylgruppe oder eine Alkylsulfonylgruppe von 1 bis 4 C-Atomen ist,
- m: die Zahl 1 oder 2 bedeutet und
- R⁸: eine der später angegebenen Bedeutungen besitzt;
- -K*-Z: ist ein Rest der allgemeinen Formel (8a), (8b), (8c), (8d), (8e) oder (8f) 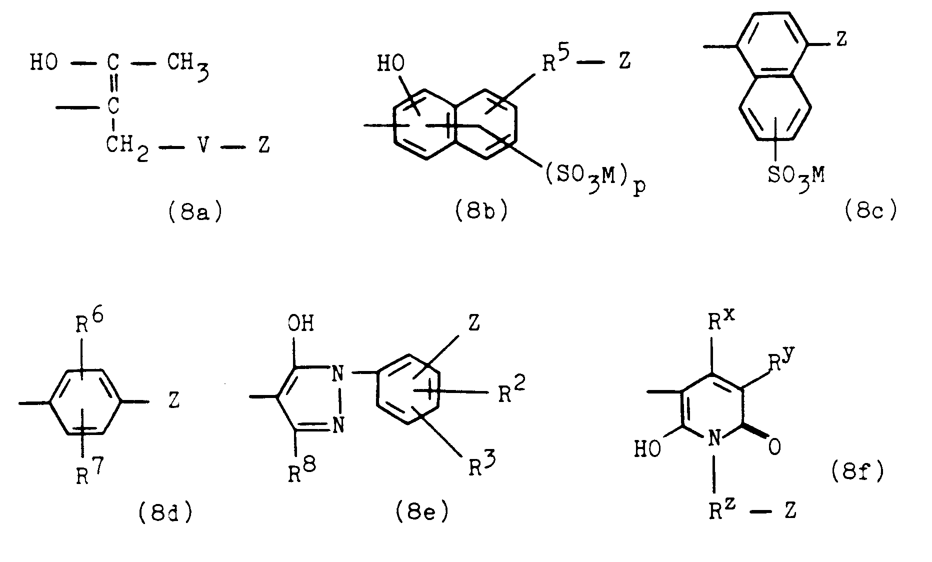 in welchen
- R², R³, Z, p und M: die obengenannten Bedeutungen haben und die Hydroxygrupe in Formel (8b) in ortho-Stellung zur freien Bindung, die mit der Azogruppe verbunden ist, steht,
- V: ein Phenylenrest ist, der die obengenannten und definierten Reste R² und R³ enthält, oder ein Naphthylenrest ist, der durch 1 oder 2 Sulfogruppen substituiert sein kann,
- R⁵: eine direkte Bindung oder ein Rest der Formel -NH-CO-phenylen- , NH-CO-NH-phenylen- , -N(CH₃)-CO-phenylen- oder N(CH₃)-CO-NH-phenylen- ist,
- R⁶: Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,
- R⁷: Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, eine Ureido- oder Phenylureidogruppe ist,
- R⁸: für Wasserstoff, Alkyl von 1 bis 4 C-Atomen, wie Methyl, Cyano, Carboxy, Carbalkoxy von 2 bis 5 C-Atomen, Carbonamido oder Phenyl steht, bevorzugt jedoch Methyl, Carboxy und Carbalkoxy von 2 bis 5 C-Atomen, wie Carbomethoxy und Carbethoxy, ist,
- R^{x}: ein Wasserstoffatom oder eine Alkylgruppe von 1 bis 4 C-Atomen, wie die Methylgruppe, oder eine durch Alkoxy von 1 bis 4 C-Atomen, wie Methoxy, oder Cyano substituierte Alkylgruppe von 1 bis 4 C-Atomen ist,
- R^{y}: ein Wasserstoffatom, eine Sulfogruppe oder eine Sulfoalkylgruppe mit einem Alkylenrest von 1 bis 4 C-Atomen, wie die Sulfomethylgruppe, oder eine Cyano- oder Carbamoylgruppe ist und
- R^{z}: eine Alkylengruppe von 1 bis 6 C-Atomen, bevorzugt von 1 bis 4 C-Atomen, oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist;
- D*: ist ein Phenylenrest, der durch 1 oder 2 Substituenten aus der Gruppe Methyl, Ethyl, Methoxy, Brom, Chlor, Carboxy und Sulfo substituiert sein kann, oder ist ein Naphthylenrest, der durch 1 oder 2 Sulfogruppen substituiert sein kann;
- K¹: ist ein Rest der allgemeinen Formel (9a), (9b) oder (9c) 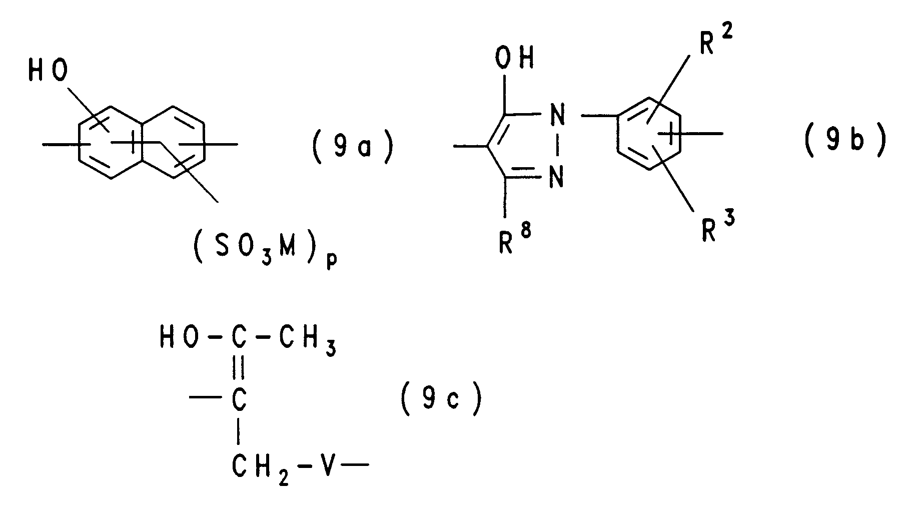 in welchen M, p, V, R², R³ und R⁸ die obengenannten Bedeutungen haben und die Hydroxygruppe in Formel (9a) in ortho-Stellung zur freien Bindung steht, die mit der Azogruppe verbunden ist.

Von den erfindungsgemäßen Disazofarbstoffen der allgemeinen Formel (3c-1) sind insbesondere die Farbstoffe der allgemeinen Formel (5b) 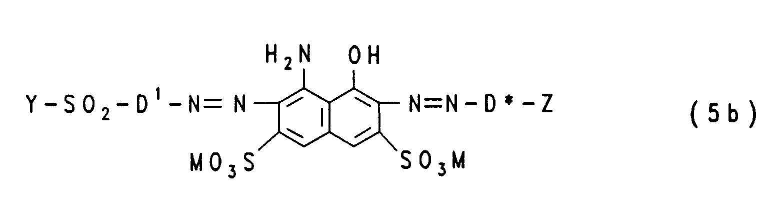
erwähnenswert, in welchen Y, D¹, M, D* und Z eine der obengenannten Bedeutungen haben.

Neben Wasserstoff und Methyl bedeutet R^{α} insbesondere Ethyl, 1-Propyl, 2-Propyl, 1-Butyl, 2-Methyl-1-propyl, tert.-Butyl, Carboxymethyl, Sulfomethyl, β-Sulfoethyl, β-Cyanoethyl, β-Chlorpropyl und β-Hydroxyethyl.

Bevorzugt ist R die Methyl- oder Ethylgruppe und insbesondere bevorzugt ein Wasserstoffatom.

Die Substituenten "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel -SO₃M , Carboxygruppen Gruppen entsprechend der allgemeinen Formel -COOM , Phosphatogruppen Gruppen entsprechend der allgemeinen Formel -OPO₃M₂, Thiosulfatogruppen Gruppen entsprechend der allgemeinen Formel -S-SO₃M und Sulfatogruppen entsprechend Gruppen der allgemeinen Formel -OSO₃M , jeweils mit M der obengenannten Bedeutung.

In den obengenannten Verbindungen der Formeln (3) und (5) bedeutet der Rest Z bevorzugt eine Gruppe -NH-Z¹ , worin Z¹ eine Gruppe der allgemeinen Formel (4a) 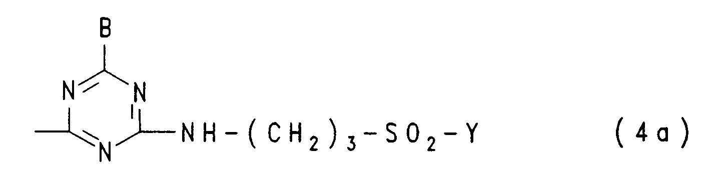
ist, worin B und Y die obengenannten, insbesondere bevorzugten Bedeutungen haben.
Insbesondere bevorzugt sind erfindungsgemäße Farbstoffe entsprechend den allgemeinen Formeln (10) und (11) 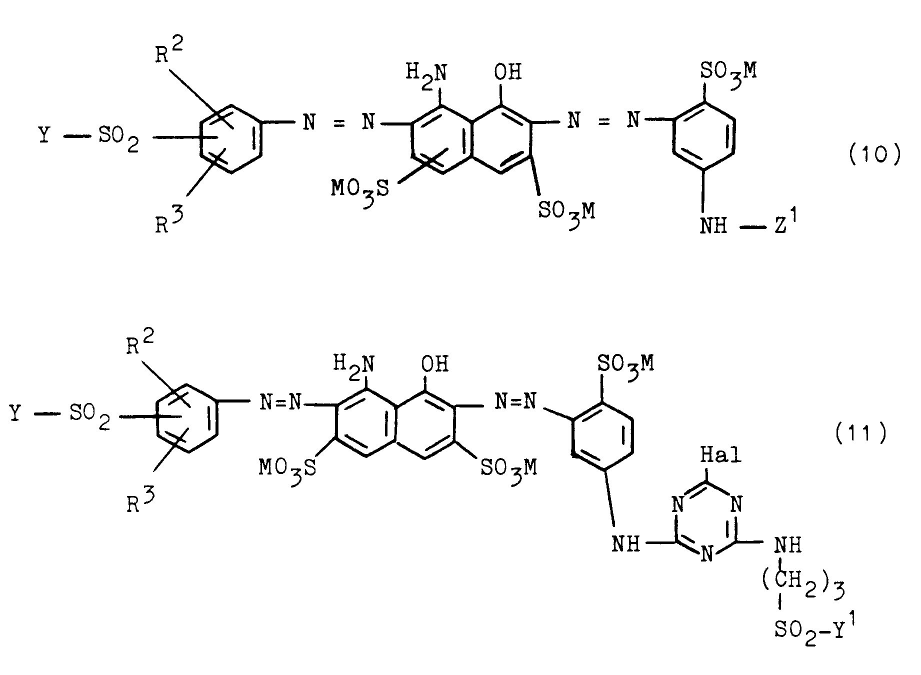
in welchen
- R²: ein Wasserstoffatom oder eine Sulfo-, Carboxy-, Methoxy-, Ethoxy- oder Methylgruppe ist,
- R³: ein Wasserstoffatom oder eine Methoxy-, Ethoxy- oder Methylgruppe ist,
- Y, M und Z¹: eine der obengenannten, insbesondere bevorzugten Bedeutungen haben,
- Hal: ein Chloratom oder bevorzugt ein Fluoratom ist und
- Y¹: die Vinylgruppe oder die β-Sulfatoethyl-Gruppe oder bevorzugt die β-Chlorethyl-Gruppe bedeutet.

In der allgemeinen Formel (11) bedeuten R² und R³ bevorzugt ein Wasserstoffatom, und die Gruppe Y-SO₂- steht bevorzugt. für die β-Sulfatoethylsulfonyl-Gruppe und ist bevorzugt in para-Stellung zur Azogruppe an den Benzolkern gebunden.

Die vorliegende Erfindung betrifft weiterhin Verfahren zur Herstellung der erfindungsgemäßen Farbstoffe.

Beispielsweise lassen sie sich erfindungsgemäß analog bekannten Verfahrensweisen der Synthese von Disazofarbstoffen durch Umsetzung von dem Fachmann geläufigen Farbstoffvorprodukten, wobei mindestens eines dieser Vorprodukte eine faserreaktive Gruppierung der allgemeinen Formel (4) bzw. der Formel -SO₂-Y enthält, herstellen, indem man die aus den Formeln (3c) als Farbstoffvorprodukte ersichtlichen Diazokomponenten der Formel Y-SO₂-X¹-D^{o}-NH₂ bzw. H₂N-D^{o}-X²-SO₂-Y und Z-D-NH₂ bzw. die aus den Formeln (5a) bzw. (5c) als Farbstoffvorprodukte ersichtlichen Diazokomponenten der Formeln Y-SO₂-X¹-D¹-NH₂ bzw. Z-D*-NH₂ in Form ihrer Diazoniumsalze mit den aus den Formeln (3c-1), (3c-2), (5a) bzw. (5c) ersichtlichen weiteren Farbstoffkomponenten (diazotierbaren Kupplungskomponenten oder reinen Kupplungskomponenten) in üblicher Weise der Synthese von Disazofarbstoffen miteinander umsetzt.

Erfindungsgemäß einsetzbare Diazokomponenten sind die Aminoverbindungen der allgemeinen Formeln Y-SO₂-X¹-D^{o}-NH₂ bzw. H₂N-D^{o}-X²-SO₂-Y und Z-D-NH₂, Z-D*-NH₂ und Y-SO₂-X¹-D¹-NH₂ mit D^{o}, D*, Z, G, X¹, X² und D¹ der obengenannten Bedeutung, die die faserreaktive Gruppe der allgemeinen Formel (4) bzw. -SO₂-Y enthalten. Erfindungsgemäß einsetzbare Kupplungskomponenten sind solche der allgemeinen Formeln (12a) bis (12d) und (13a) bis (13c) 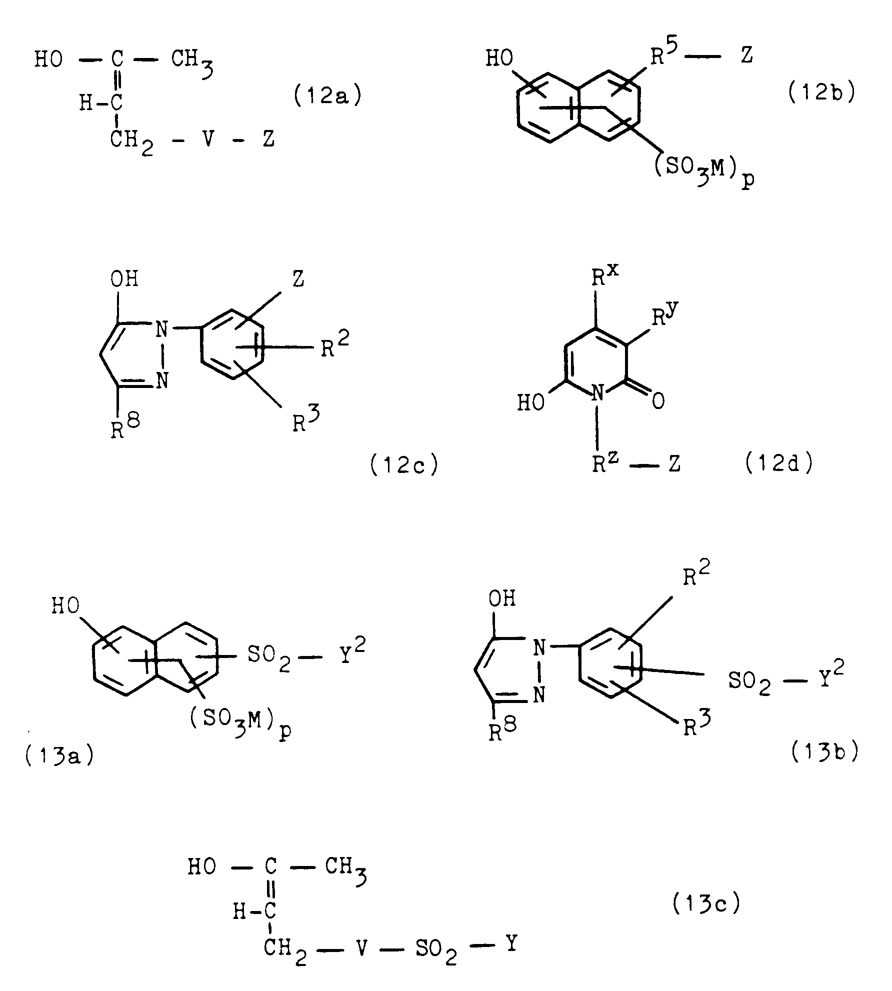
mit Z, Y, V, R⁵, M, p, R², R³, R⁸, R^{x}, R^{y} und R^{z} der obengenannten, insbesondere bevorzugten Bedeutungen.

Weitere Diazokomponenten, die erfindungsgemäß zur Synthese der Farbstoffe der allgemeinen Formel (1) eingesetzt werden können, sind beispielsweise Diaminoverbindungen der allgemeinen Formel H₂N-D-NH₂ oder H₂N-D*-NH₂ mit D und D* der obengenannten Bedeutung bzw. deren Monoacylaminoderivate (wobei die Acylgruppe als übliche Schutzgruppe dient, um eine Diazotierung der zweiten Aminogruppe auszuschließen, die dann nach Diazotierung und Kupplung in üblicher Weise hydrolytisch abgespalten werden kann). Die mit diesen Diazokomponenten erhältlichen Aminoazoverbindungen können dann erfindungsgemäß mit einem Cyanurhalogenid oder einer Verbindung der allgemeinen Formel Z¹-Hal , worin Z¹ und Hal die obengenannten Bedeutungen haben, analog bekannten Verfahrensweisen der Umsetzung von Aminoverbindungen bzw. Aminoazoverbindungen mit Halogen-triazin-Derivaten umgesetzt werden.

Die Diazotierungs- und Kupplungsreaktionen erfolgen in üblicher Weise, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle der aminogruppenhaltigen Kupplungskomponente und bei einem pH-Wert zwischen 3 und 7,5 im Falle der hydroxygruppenhaltigen Kupplungskomponente und bei einer Temperatur zwischen 0 und 25°C, ebenso bevorzugt in wäßrigem Medium.

Die erfindungsgemäßen Farbstoffe können ebenfalls erfindungsgemäß in der Weise hergestellt werden, indem man ein Cyanurhalogenid, wie Cyanurfluorid oder Cyanurchlorid, mit einer Verbindung der allgemeinen Formel (15) 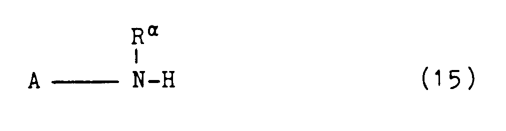
und mit einer Aminoverbindung der allgemeinen Formel (16)

H-Q (16)

in welchen R^{α} und Q die obengenannten Bedeutungen haben und A ein Rest der allgemeinen Formel (15A-1), (15A-2), (15B) oder (15C)

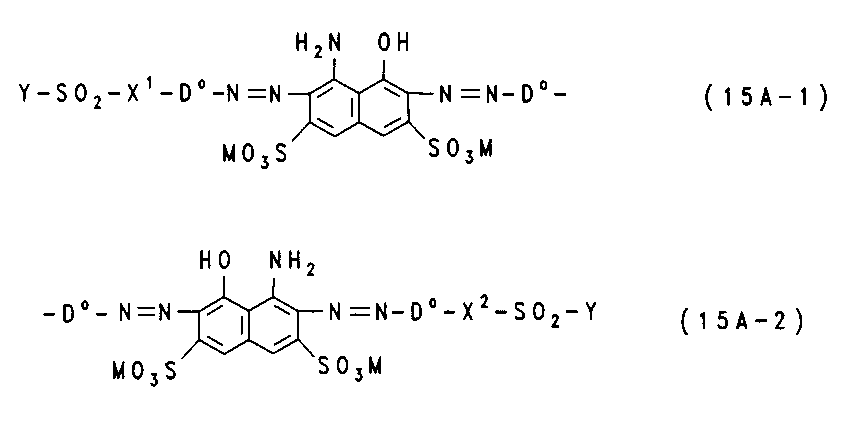

Y-SO₂-X¹-D¹-N=N-E¹-N=N-K*- (15B)

-D*-N=N-E¹-N=N-K¹-X²-SO₂-Y (15C)

ist, in welchen D^{o}, M, Y, X¹, X², D¹, E¹, K*, D* und K¹ eine der obengenannten Bedeutungen haben, in beliebiger Folge umsetzt.

So kann man zunächst eine Aminoverbindung der allgemeinen Formel (15) mit einem Cyanurhalogenid, wie Cyanurchlorid oder Cyanurfluorid, zur Halogentriazinylamino-Verbindung der allgemeinen Formel (17) 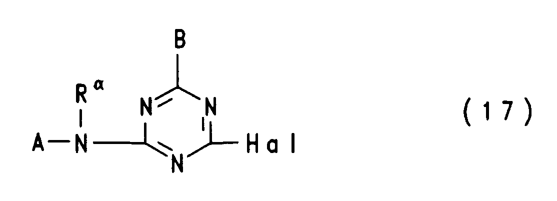
in welcher A, Hal, B und R^{α} die obengenannten Bedeutungen haben, umsetzen und diese Verbindung (17) durch Reaktion mit einer Aminoverbindung der allgemeinen Formel (16) in äquivalenter Menge in den Endfarbstoff (3c-1), (3c-2), (5a) bzw. (5c) überführen, oder man setzt zunächst eine Aminoverbindung der allgemeinen Formel (16) mit einem Cyanurhalogenid zur Halogentriazinylamino-Verbindung der allgemeinen Formel (18) 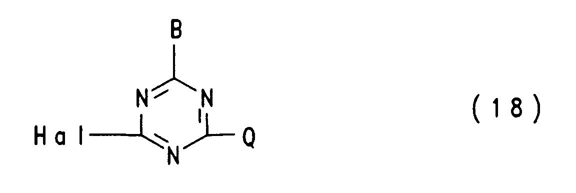
mit Hal, B und Q der obengenannten Bedeutungen um und die erhaltene Verbindung (18) sodann in äquivalenter Menge mit einer Verbindung der allgemeinen Formel (15) zum Endfarbstoff.

Die Kondensationsreaktionen zwischen dem Cyanurhalogenid bzw. den Halogentriazinylamino-Verbindungen (17) und (18) mit den Aminoverbindungen (15) und/oder (16) können in der üblichen Weise der Umsetzung eines Cyanurhalogenids bzw. einer Halogentriazinylaminoverbindung mit Aminoverbindungen erfolgen, so in organischem oder bevorzugt wäßrig-organischem Medium, insbesondere bevorzugt in wäßrigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise Natrium, Kalium oder Calcium sind. Säurebindende Mittel sind ebenso tertiäre Amine, wie beispielsweise Pyridin, Triethylamin oder Chinolin. Sofern diese Kondensationsreaktionen in organischem oder wäßrig-organischem Medium erfolgen, ist das (anteilige) organische Lösemittel Aceton, Dioxan und Dimethylformamid.
Die Kondensationsreaktionen zwischen dem Cyanurhalogenid und den Aminoverbindungen erfolgen in der Regel bei einer Temperatur zwischen -10°C und + 70°C, vorzugsweise zwischen -5°C und +30°C, sowie bei einem pH-Wert zwischen 1,5 und 12, bevorzugt zwischen 4,5 und 8. Die Umsetzung der Halogentriazinylamino-Verbindungen der allgemeinen Formeln (17) oder (18) mit einer Aminoverbindung der allgemeinen Formeln (15) bzw. (16) erfolgt beispielsweise bei einer Temperatur zwischen 0°C und 70°C, bevorzugt zwischen 10 und 50°C,und bei einem pH-Wert zwischen 2 und 8, bevorzugt zwischen 4 und 7.

Bei den Kondensationsreaktionen ist darauf zu achten, daß die faserreaktiven Gruppierungen im alkalischen Bereich nicht geschädigt werden.

Die erfindungsgemäßen Farbstoffe, die als Gruppen -SO₂-Y β-Sulfatoethylsulfonyl- oder β-Phosphatoethylsulfonyl-Gruppen besitzen, können erfindungsgemäß auch so hergestellt werden, daß man einen Farbstoff der allgemeinen Formel (3c), (5a) bzw. (5c) mit obiger Bedeutung, in welcher jedoch eine oder mehrere der Formelreste Y, Y¹ und Y² eine β-Hydroxyethyl-Gruppe darstellen, analog bekannten Verfahrensweisen mit einem Sulfatisierungsmittel bzw. Phosphatisierungsmittel, wie konzentrierter Schwefelsäure und Schwefeltrioxid enthaltender Schwefelsäure bzw. wäßriger konzentrierter Phosphorsäure und Polyphosphorsäure, umsetzt, wobei die Sulfatisierung in der Regel bei einer Temperatur zwischen 10°C und 25°C und die Phosphatisierung bei einer Temperatur zwischen 20 und 100°C erfolgt.

Die Ausgangsfarbstoffe mit den β-Hydroxyethylsulfonyl-Gruppen sind analog den obigen Angaben zur Herstellung der erfindungsgemäßen Farbstoffe synthetisierbar, indem man entweder entsprechende Farbstoffvorprodukte einsetzt, die diese β-Hydroxyethylsulfonyl-Gruppe(n) enthalten, oder einen Amino-Farbstoff der allgemeinen Formel (15) und eine Aminoverbindung der allgemeinen Formel (16), in welcher jedoch Y für die β-Hydroxyethyl-Gruppe steht, mit einem Cyanurhalogenid gemäß den obigen Reaktionsbedingungen umsetzt.

Erfindungsgemäße Farbstoffe entsprechend der allgemeinen Formel (1), in welchen eine oder mehrere der Formelreste Y, Y¹ und Y² eine Vinylgruppe darstellen, können erfindungsgemäß auch aus Farbstoffen entsprechend der allgemeinen Formel (1) erhalten werden, bei denen mindestens eine der Formelreste Y, Y¹ und Y² eine β-Sulfatoethyl- oder β-Halogenethyl-Gruppe bedeuten, indem man die β-Sulfatoethyl- oder β-Halogenethyl-Gruppe durch Behandlung mit einem wäßrigen Alkali, wie beispielsweise Natriumhydrogencarbonat oder Natriumhydroxid, so in wäßrigen Medium bei einer Temperatur von 50 bis 60°C und einem pH-Wert von 9 bis 11, zur Vinylgruppe überführt.

Die Ausgangsverbindungen der allgemeinen Formel (16) sind beispielsweise aus der deutschen Patentschrift 26 14 550 und der anfangs erwähnten europäischen Patentschrift Nr. 0 076 782 bekannt.

Aromatische Amine entsprechend der allgemeinen Formel (Y-SO₂-X¹-)ₙ-D-NH₂ als Diazokomponenten in den erfindungsgemäßen Mono- und Disazofarbstoffen bzw. als Ausgangsverbindungen zur Synthese dieser Farbstoffe sind beispielsweise 4-VS-Anilin (wobei hier wie im folgenden VS eine Gruppe der allgemeinen Formel -SO₂Y² mit Y² der obengenannten Bedeutung darstellt), 3-VS-Anilin, 2-Brom-4-VS-anilin, 2-Sulfo-5-VS-anilin, 2-Sulfo-4-VS-anilin, 2-Methoxy-5-VS-anilin, 2-Methoxy-5-methyl-4-VS-anilin, 2,5-Dimethoxy-4-VS-anilin, 2-Hydroxy-5-VS-anilin, 4-Chlor-3-VS-anilin, 2-Chlor-5-VS-anilin, 3,4-Di-VS-anilin-, 2,5-Di-VS-anilin-, 4-(β-Sulfatoethylamino)-3-VS-anilin, 2-(β-Sulfatoethylamino)-5-VS-anilin, 4-(β-Succinylamidoethylamido)-3-VS-anilin, 4-(3′-VS-benzoylamido)-anilin, 3-(3′-VS-benzoylamido)-anilin, 6-VS-2-Naphthylamin, 8-VS-2-naphthylamin, 1-Sulfo-6-VS-2-naphthylamin, 6-Sulfo-8-VS-2-naphthylamin, 6-Sulfo-8-VS-1-hydroxy-2-naphthylamin, 2-Amino-4,4′-di-VS-diphenyl, 2-Sulfo-5-[γ-(β′-chlorethylsulfonyl)-butyrylamino]-anilin, 2-Sulfo-5-[γ-(vinylsulfonyl)butyrylamino]-anilin, 2-Sulfo-4-[γ-(β′-chlorethylsulfonyl)-butyrylamino]-anilin und 2-Sulfo-4-[γ-(vinylsulfony)-butyrylamino]-anilin.

Ausgangsverbindungen entsprechend der allgemeinen Formel H₂N-D-NH₂ bzw. H₂N-D*-NH₂ sind beispielsweise 1,4-Phenylen-diamin, 1,4-Phenylendiamin-2-sulfonsäure, 1,4-Phenylendiamin, 1,4-Phenylendiamin-2-sulfonsäure, 1,4-Phenylendiamin-2-carbonsäure, 1,4-Diamino-naphthalin-2-sulfonsäure, 2,6-Diamino-naphthalin-8-sulfonsäure, 2,6-Diamino-naphthalin-4,8-disulfonsäure, 1,3-Phenylendiamin, 1,3-Phenylendiamin-4-sulfonsäure, 1,3-Phenylendiamin-4,6-disulfonsäure, 1,4-Phenylendiamin-2,6-disulfonsäure, 1,4-Phenylendiamin-2,5-disulfonsäure, 1,4-Diaminonaphthalin-6-sulfonsäure, 4,4′-Diamino-diphenyl-3-sulfonsäure und 4,4′-Diamino-stilben-2,2′-disulfonsäure.

Ausgangsverbindungen entsprechend der allgemeinen Formel H-E-NH₂ bzw. H-E¹-NH₂ , die zur Synthese der erfindungsgemäßen Disazofarbstoffe eingesetzt werden können und sowohl als Kupplungskomponente und anschließend an die Kupplung als Diazokomponente dienen, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylaminoanilin, 2-Methoxy-5-acetylamino-anilin, 2-Methoxy-5-methylanilin, 1-Aminonaphthalin-6-sulfonsäure, 1-Aminonaphthylin-7-sulfonsäure, 2-Sulfo-5-acetylamino-anilin, 2-Amino-5-naphthol-7-sulfonsäure, 2-Amino-8-naphthol-6-sulfonsäure, 2-(4-Amino-benzoylamino)-5-naphthol-7-sulfonsäure, 1-(4′-Amino-2-sulfo-phenyl)-3-methyl-oder-3-carboxy-5-pyrazolon und N-(3-Sulfo-4-amino)-acetoacetyl-anilid.

Ausgangsverbindungen, die als Kupplungskomponenten entsprechend der allgemeinen Formel H-K¹-X²-SO₂-Y² bzw. H-K-X¹-SO₂-Y² zur Synthese der erfindungsgemäßen Farbstoffe dienen können, sind beispielsweise 1-[4′-(β-Sulfatoethylsulfonyl)-phenyl]-3-methyl-5-pyrazolon, 1-[4′-(Vinylsulfonyl)-phenyl]-3-methyl-5-pyrazolon, 1-[4′-(Vinylsulfonyl)-phenyl]-3-carboxy-5-pyrazolon, 1-[3′-(β-Chlorethylsulfonyl)-benzoylamino]-3,6-disulfo-8-naphthol, 1-[3′-(Vinylsulfonyl)-benzoylamino]-3,6-disulfo-8-naphthol, 1-[3′-(Vinylsulfonyl)-benzoylamino]-4,6-disulfo-8-naphthol, 1-[3′-(β-Sulfatoethylsulfonyl)-benzoylamino]-4,6-disulfo-8-naphthol, 2-[3′-(β-Chlorethylsulfonyl)-benzoylamino]-6-sulfo-8-naphthol, 2-[3′-(Vinylsulfonyl)-benzoylamino]-6-sulfo-8-naphthol, 3-[3′-(β-Chlorethylsulfonyl)-benzoylamino]-6-sulfo-8-naphthol, 3-[3′-(Vinylsulfonyl)-benzoylamino]-6-sulfo-8-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N′-(3′-β-Chlorethylsulfonyl-phenyl)-ureido]-3,6-disulfo-8-naphthol, 1-[N′-(3′-Vinylsulfonyl-phenyl)-ureido]-3,6-disulfo-8-naphthol, 1-[N′-(3′-Vinylsulfonyl-propyl)-ureido]-3,6-disulfo-8-naphthol, 1-[N′-(3′-β-Chlorethylsulfonyl-phenyl)-ureido]-4,6-disulfo-8-naphthol, 1-[N′-(3′-Vinylsulfonyl-phenyl)-ureido]-4,6-disulfo-8-naphthol, 1-[N′-(3′-β-Chlorethylsulfonyl-propyl)-ureido]-4,6-disulfo-8-naphthol, 2-[N′-(3′-β-Sulfatoethylsulfonyl-phenyl)-ureido]-6-sulfo-8-naphthol, 2-[N′-(3′-β-Chlorethylsulfonyl-propyl)-ureido]-6-sulfo-8-naphthol, 3-[N′-(3′-β-Chlorethylsulfonyl-phenyl)-ureido]-6-sulfo-8-naphthol, 3-[N′-(3′-Vinylsulfonyl-propyl)-ureido]-6-sulfo-8-naphthol, 2-Sulfo-5-[N′-(3''-β-chlorethylsulfonyl)-phenyl]-ureido-anilin und 3-[N′-(3''-β-Sulfatoethylsulfonyl)-phenyl]-ureido-anilin.

Kupplungskomponenten entsprechend der allgemeinen Formel H-K-NHR^{α} bzw. H-K*-NHR^{α} , die zum Aufbau der erfindungsgemäßen Azofarbstoffe dienen, in welchen der faserreaktive Rest der allgemeinen Formel (4) in der Kupplungskomponente enthalten ist, in deren Aminogruppe -NHR^{α} anschließend dieser faserreaktive Rest eingeführt werden kann, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Aminonaphthalin-6-sulfonsäure oder -7-sulfonsäure, 1-Aminonaphthalin-8-sulfonsäure, 2-Sulfo-5-acetylamino-anilin, 2-Amino-5-naphthol-7-sulfonsäure, 2-Amino-8-naphthol-6-sulfonsäure, 2-(4′-Aminobenzoyl-amino)-5-naphthol-7-sulfonsäure, 1-(4′-Amino- oder 1-(4′-Acetylamino-2-sulfophenyl)-3-methyl- oder -3-carboxy-5-pyrazolon, N-(3-Sulfo-4-amino)-acetoacetyl-anilid, 1-Amino-8-naphthol-3,6- oder -4,6-disulfonsäure, 1-(3′- oder 1-(4′-Aminobenzoyl)-amino-8-naphthol-3,6- oder -4,6-disulfonsäure, 1-Acetylamino-8-naphthol-3,6- oder -4,6-disulfonsäure, 2-Acetylamino-5-naphthol-7-sulfonsäure, 2-Acetylamino-8-naphthol-6-sulfonsäure, 3-Acetylamino-8-naphthol-6-sulfonsäure, 3-(N-Methylamino)-8-naphthol-6-sulfonsäure, 1-(3′-Amino- oder 1-(3′-Acetylamino-6′-sulfophenyl)-3-methyl- oder -3-carboxy-5-pyrazolon, 2-(N-Methyl-N-acetylamino)- oder 2-Methylamino-5-naphthol-7-sulfonsäure, N-Methyl-anilin und N-Propyl-m-toluidin.

Ausgangsverbindungen entsprechend der allgemeinen Formel (16) sind beispielsweise γ-(β′-Chlorethylsulfonyl)-propylamin, γ-(β′-Sulfatoethylsulfonyl)-propylamin, γ-(β′-Hydroxyethylsulfonyl)-propylamin, γ-(Vinylsulfonyl)-propylamin, N-Ethyl-γ-(β′-chlorethylsulfonyl)-propylamin, N-Ethyl-γ-(β′-sulfatoethylsulfonyl)-propylamin, N-Ethyl-γ-(β′-hydroxyethylsulfonyl)-propylamin und N-Ethyl-γ-(vinylsulfonyl)-propylamin sowie 4-(β-Sulfatoethylsulfonyl)-piperidin, 4-(Vinylsulfonyl)-piperidin, N′-[γ-(β′-Chlorethylsulfonyl)-propyl]-piperazin, 2-[β-(β′-Chlorethylsulfonyl)-ethyl]-piperidin und 3-[(β-Sulfatoethylsulfonyl)-methyl]-piperidin.

Bivalente Kupplungskomponenten, die zum Aufbau solcher Disazofarbstoffe geeignet sind, in welchen der bivalente Kupplungsrest mit zwei Diazokomponenten verbunden ist, von denen die eine einen faserreaktiven Rest der allgemeinen Formel Y-SO₂-X¹- und die andere einen faserreaktiven Rest der allgemeinen Formel (4) enthält, sind beispielsweise Resorcin, 5,5′-Dihydroxy-7,7′-disulfo-2,2′-dinaphthyl harnstoff und insbesondere 1-Amino-8-naphthol-3,6-disulfonsäure und 1-Amino-8-naphthol-4,6-disulfonsäure.

Die erfindungsgemäßen Farbstoffe entsprechend der allgemeinen Formel (1) eignen sich als faserreaktive Farbstoffe zum Färben und Bedrucken von hydroxygruppenhaltigen Fasern, wie Cellulosefasermaterialien, insbesondere Baumwolle, und ebenso für synthetische oder natürliche Polyamidfasern, wie Wolle. Als Färbeverfahren eignen sich die bekannten Färbe- und Druckverfahren für faserreaktive Farbstoffe, insbesondere solche für faserreaktive Farbstoffe, die eine Kombination aus den faserreaktiven Gruppen der Fluortriazin- und Vinylsulfonreihe besitzen. Solche Verfahrensweisen sind zahlreich in der Allgemein- und Patentliteratur beschrieben, so beispielsweise in den anfangs genannten Patentanmeldungs-Veröffentlichungen.

Insbesondere sind die erfindungsgemäßen Farbstoffe im Kaltverweilverfahren mit Vorteil anwendbar, da sie sich durch eine gleichmäßig hohe Fixierausbeute auszeichnen. Vorteilhaft ist auch ihre Anwendung beim Färben nach den üblichen Ausziehverfahren, desweiteren nach den Einbad-Klotz-Dämpf-Verfahren, den Zweibad-Klotz-Aufdock-Verfahren und den Zweibad-Klotz-Dämpf-Verfahren. Auch bei den Druckverfahren zeigen sie gleichmäßig hohe Fixierausbeuten, unabhängig von der Art der Fixierung, die beispielsweise durch Dämpfen oder in der Trockenhitze erfolgen kann. Die erfindungsgemäß erhältlichen Färbungen und Drucke sind von hoher Brillanz und Farbstärke. Sie zeigen gute Lichtechtheiten, auch im nassen Zustand, und gute Haßechtheiten, wie gute Echtheiten bei der 60°C- und 95°C-Wäsche und gute Seewasser-, saure und alkalische Schweiß- und Chlorbadewasserechtheiten, desweiteren eine gute Peroxidechtheit und Abgasechtheit. Ferner zeichnen sich die Farbstoffe durch Unempfindlichkeit gegen atmosphärische Einflüsse aus. Desweiteren liefern sie gute Färbungen auf Polyamidfasermaterialien, wie Wolle, wobei insbesondere deren gute Lichtechtheit und insbesondere deren gute Wasch- und Schweißechtheiten hervorgehoben werden können. Desweiteren ist ihr gutes Aufbauvermögen zu nennen.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.
Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima (λₘₐₓ) im sichtbaren Bereich wurden anhand derer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

Eine Lösung mit einem pH-Wert von 5 von 107 Teilen der Verbindung 1-Amino-8-hydroxy-3,6-disulfo-2-[4′-(β-sulfatoethylsulfonyl-phenyl)]-azo-naphthalin wird mit einer auf üblichem Wege hergestellten schwefelsauren, wäßrigen Diazoniumsalzsuspension von 41,4 Teilen 2-Sulfo-5-acetylamino-anilin versetzt. Die Kupplungsreaktion erfolgt bei einem pH-Wert von 6 bis 7 und einer Temperatur von etwa 10°C. Nach beendeter Kupplung wird die erhaltene Disazoverbindung mittels etwa 180 Teilen Kaliumchlorid ausgesalzen und isoliert.

132 Teile dieser Disazoverbindung werden in einer Mischung aus 500 Teilen Wasser und 100 Teilen 95%iger Schwefelsäure eine Stunde bei 95 bis 100°C zwecks Hydrolyse der Acetylaminogruppe erhitzt. Man kühlt danach den Ansatz auf 25°C ab, filtriert die ausgefallene Disazoverbindung ab, wäscht sie mit 200 Teilen Wasser und trocknet sie unter reduziertem Druck.

116 Teile dieser Disazoverbindung werden bei 10 bis 20°C in 350 Teile 100%ige Schwefelsäure eingetragen. Man rührt noch 20 Stunden bei 20 bis 25°C nach und gibt den Ansatz sodann auf eine Mischung aus 750 Teilen Eis, 100 Teilen Wasser und 160 Teilen Natriumchlorid. Die ausgesalzene Disazoverbindung entsprechend der Formel (in Form der freien Säure geschrieben) 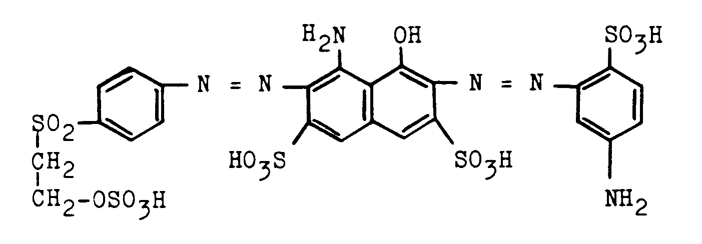
wird isoliert und unter reduziertem Druck getrocknet.

81 Teile dieser Disazoverbindung werden in 500 Teilen Wasser gelöst. Die Lösung wird mit 100 Teilen Eis versetzt, und anschließend gibt man 15 Teile Cyanurfluorid unter Einhaltung eines pH-Wertes zwischen 5,0 und 5,5 und einer Temperatur von 0 bis 5°C hinzu. Die zweite Kondensationsreaktion führt man nach Zugabe von 26,7 Teilen 3-(β-Chlorethylsulfonyl)-propylamin-Hydrochlorid bei einer Temperatur von 0 bis 5°C und einem pH-Wert von 6,0 bis 6,5 durch.

Man isoliert die erfindungsgemäße Disazoverbindung nach Zugabe von einem Teil Dinatriumhydrogenphosphat und 3 Teilen Natriumdihydrogenphosphat durch Eindampfen der Syntheselösung, wie beispielsweise durch Sprühtrocknung. Man erhält das Alkalimetallsalz (Natriumsalz) der Verbindung der Formel 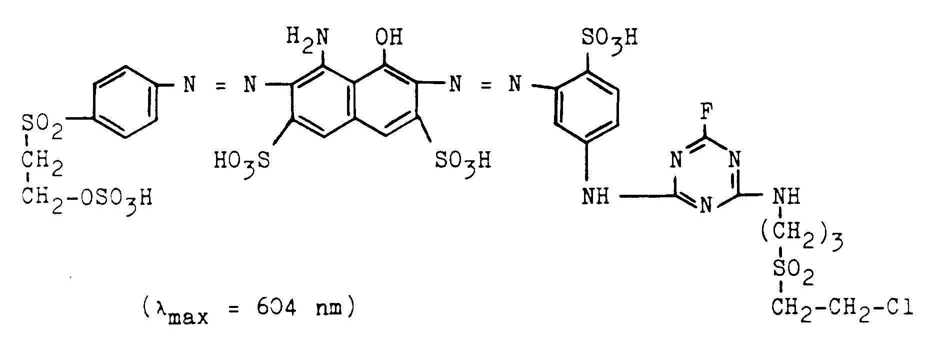
in Form eines elektrolytsalzhaltigen Pulvers. Die erfindungsgemäße Disazoverbindung besitzt sehr gute faserreaktive Farbstoffeigenschaften und färbt die in der Beschreibung genannten Materialien, insbesondere Cellulosefasermaterialien, wie Baumwolle, nach den in der Technik für faserreaktiver Farbstoffe üblichen Färbe- und Druckverfahren in marineblauen Tönen mit guten Echtheitseigenschaften, von denen insbesondere die Chlorbadewasserechtheit hervorgehoben werden kann.

### Beispiel 2

Eine Lösung von 19,8 Teilen 1,3-Diaminobenzol-4-sulfonsäure in 100 Teilen Wasser und 12,9 Teilen einer 33%igen wäßrigen Natronlauge gibt man langsam bei 5 bis 10°C innerhalb von 30 Minuten in eine Suspension aus 19,7 Teilen Cyanurchlorid in 50 Teilen Wasser und 85 Teilen Eis. Mittels Natriumcarbonat stellt man den pH-Wert auf 4,0 bis 4,5 und rührt den Ansatz noch eine Stunde bei 8 bis 10°C nach.

Die erhaltene Suspension der 2-Sulfo-5-(dichlortriazinyl)-amino-anilin-Verbindung vermischt man mit 6,9 Teilen Natriumnitrit und 100 Teilen Eis und diazotiert sie bei 0 bis 5°C mittels 68,4 Teilen einer 20%igen wäßrigen Schwefelsäure. Die erhaltene Diazoniumsalzsuspension gibt man bei 10 bis 15°C und einem pH-Wert von 6,0 bis 6,5 in etwa 600 Teile einer wäßrigen Lösung von 53 Teilen der Verbindung 1-Amino-8-hydroxy-3,6-disulfo-2-[4′-(β-sulfatoethylsulfonyl)-phenyl]-azo-naphthalin. Man führt die Kupplungsreaktion unter Einhaltung dieses pH-Wertes durch, gibt anschließend 24,5 Teile 3-(β-Chlorethylsulfonyl)-propylamin-Hydrochlorid hinzu und führt die Kondensationsreaktion bei einem pH-Wert von 6,0 bis 6,5 und einer Temperatur von 40 bis 45°C während einer Stunde durch.

Man isoliert die erfindungsgemäße Verbindung entsprechend der Formel 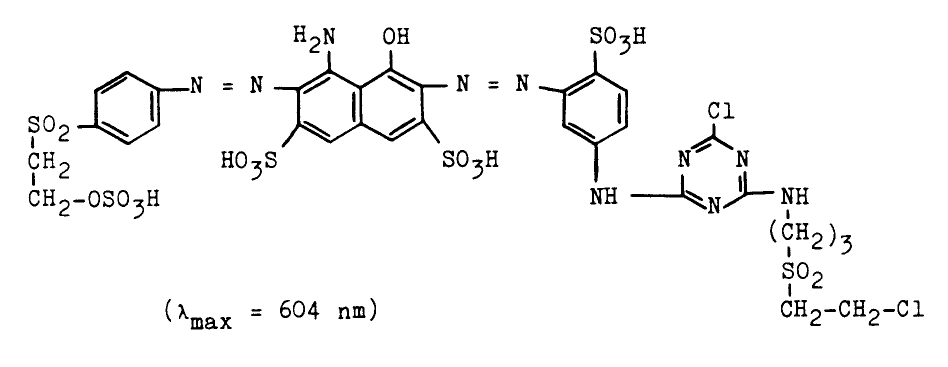
als Alkalimetallsalz (Natriumsalz) in Form eines elektrolythaltigen schwarzen Pulvers. Die erfindungsgemäße Verbindung zeigt sehr gute Farbstoffeigenschaften und liefert auf den in der Beschreibung genannten Materialien, wie insbesondere Cellulosefasermaterialien, marineblaue Färbungen und Drucke mit guten Echtheitseigenschaften, von denen insbesondere die Chlorbadewasserechtheit hervorgehoben werden kann.

### Beispiel 3

Man geht analog dem Beispiel 1 von der Ausgangsverbindung 1-Amino-8-hydroxy-3,6-disulfo-2-[3′-(β-sulfatoethylsulfonyl)-phenyl]-azo-7-(2˝-sulfo-5˝-aminophenyl)-azo-naphthalin aus und setzt diese gemäß den Angaben des Beispieles 2 mit der äquivalenten Menge an Cyanurchlorid und 3-(β-Chlorethylsulfonyl)-propylamin-Hydrochlorid um. Man erhält die erfindungsgemäße Verbindung der Formel 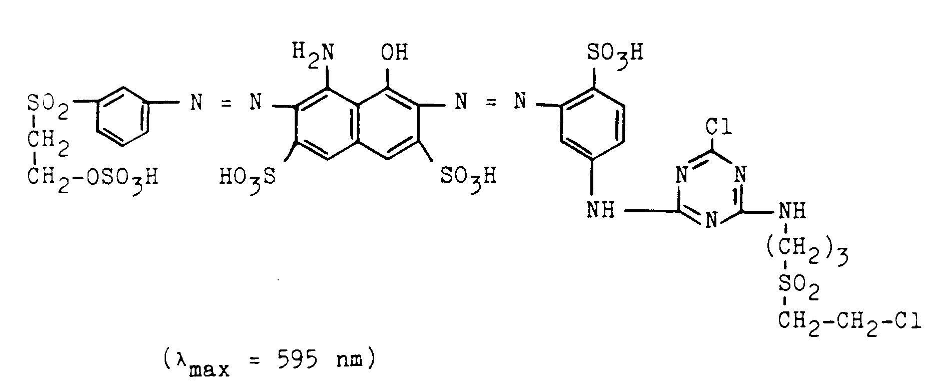
als Alkalimetallsalz (Natriumsalz). Sie besitzt gute Farbstoffeigenschaften und färbt beispielsweise Baumwolle in echten, marineblauen Tönen.

### Beispiel 4

89 Teile der Ausgangs-Disazoverbindung 1-Amino-8-hydroxy-3,6-disulfo-2-[2′-sulfo-4′-(β-hydroxyethylsulfonyl)-phenyl]- azo-7-(2˝-sulfo-5˝-amino-phenyl)-azo-naphthalin werden bei 20 bis 25°C in 280 Teile 100%ige Schwefelsäure eingerührt. Man rührt den Ansatz noch 20 Stunden bei 20°C nach und gibt ihn sodann in ein Gemisch aus 50 Teilen Wasser und 450 Teilen Eis. Die überschüssige Schwefelsäure wird sodann mittels 300 Teilen Calciumcarbonat ausgefällt, die Lösung mittels 6 Teilen Natriumcarbonat auf einen pH-Wert von 5,8 bis 6 gestellt, auf 40°C erwärmt und filtriert. Der Rückstand wird mit 200 Teilen Wasser gewaschen und die vereinigten Filtrate eingedampft.

Die erhaltene Disazoverbindung mit der β-Sulfatoethylsulfonyl-Gruppe wird in 400 Teilen Wasser gelöst. Man gibt 100 Teile Eis hinzu und setzt sie bei 0 bis 5°C und einem pH-Wert von 5 bis 6 mit 15 Teilen Cyanurfluorid um, rührt anschließend noch einige Zeit nach und gibt dann 26,7 Teile 3-(β-Chloroethylsulfonyl)-propylamin-Hydrochlorid hinzu und führt die Kondensationsreaktion bei einem pH-Wert von 6,0 bis 6,5 und einer Temperatur von 40 bis 45°C während etwa 3 Stunden durch.

Man isoliert die erfindungsgemäße Verbindung der Formel 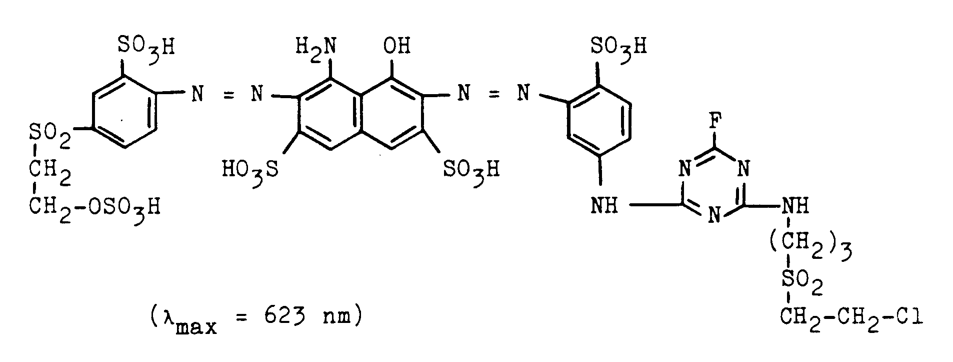
in Form des Alkalimetallsalzes (Natriumsalzes). Die erfindungsgemäße Verbindung besitzt sehr gute Farbstoffeigenschaften und liefert nach den für faserreaktive Farbstoffe üblichen Anwendungsbedingungen auf den in der Beschreibung genannten Materialien, wie beispielsweise Cellulosefasermaterialien, marineblaue Färbungen und Drucke mit guten Echtheitseigenschaften.

## Patentansprüche (Patentansprüche für folgende(n) Vertragsstaat(en): DE, GB, FR, IT, CH, LI, BE)

1. Farbstoff der allgemeinen Formel (3c-1), (3c-2), (5a) und (5c) 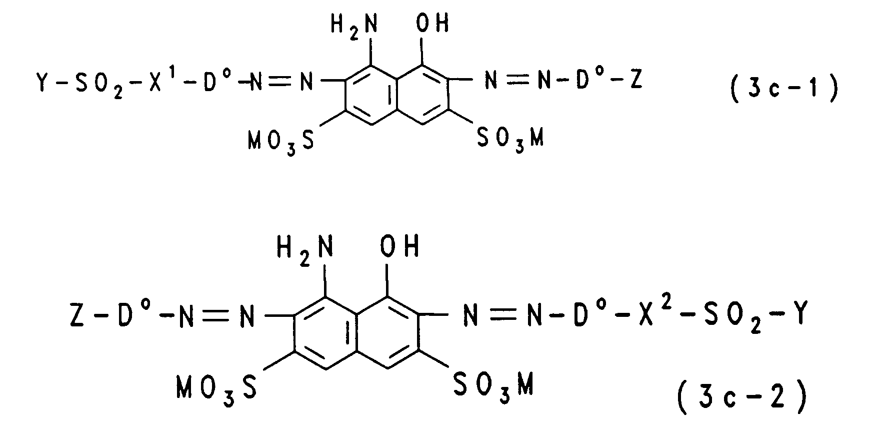
Y-SO₂-X¹-D¹-N=N-E¹-N=N-K*-Z (5a)
Z-D*-N=N-E¹-N=N-K¹-X²-SO₂-Y (5c)
in welchen bedeuten:
Y ist die Vinylgruppe oder eine β-Sulfatoethyl-, β-Halogenethyl-, β-Thiosulfatoethyl-, β-Phosphatoethyl- oder β-Acetoxyethyl-Gruppe;
Z ist ein Rest der allgemeinen Formel (4) 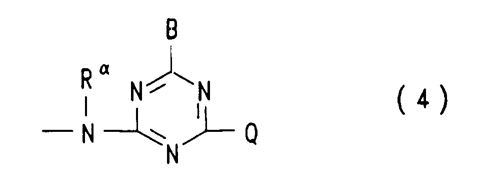 worin bedeuten:
R^{α} ist ein Wasserstoffatom oder eine geradkettige oder verzweigte Alkylgruppe von 1 bis 4 C-Atomen, die durch eine Carboxy-, Sulfo-, Cyano- oder Hydroxygruppe oder durch ein Chloratom substituiert sein kann;
B ist Fluor, Chlor, Brom, Alkylsulfonyl von 1 bis 4 C-Atomen, Phenylsulfonyl, Methoxy oder Sulfo;
Q ist eine Gruppe der allgemeinen Formel (2a) oder (2b) 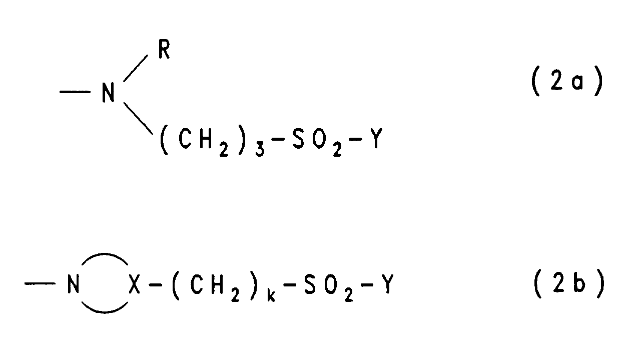 in welchen
R ein Wasserstoffatom oder eine Alkylgruppe von 1 bis 4 C-Atomen ist,
Y eine der obengenannten Bedeutungen hat,
k für die Zahl Null, 1, 2, 3 oder 4 steht und
X zusammen mit dem N-Atom und 1 oder 2 Alkylengruppen von 1 bis 5 C-Atomen und gegebenenfalls 1 oder 2 Heteroatomen den bivalenten Rest eines heterocyclischen Ringes bildet;
M ist ein Wasserstoffatom oder ein Alkalimetall;
X¹ ist eine direkte Bindung oder eine Alkylengruppe von 1 bis 4 C-Atomen oder der bivalente Rest einer Alkanoylamido-Gruppe von 2 bis 5 C-Atomen;
X² hat eine der für X¹ angegebenen Bedeutungen;
D^{o} ist ein Rest der allgemeinen Formel (6a), (6b) oder (6c) 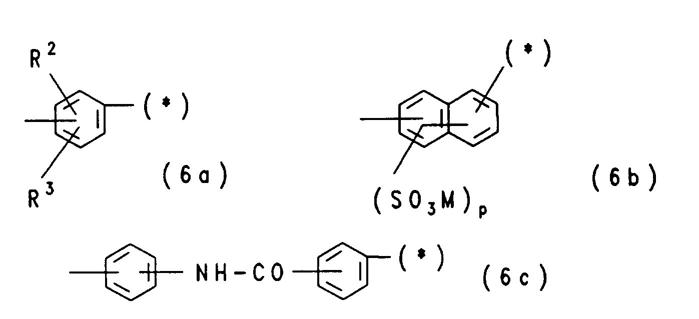 in welchen
die mit (*) versehene Bindung zur Azogruppe führt,
R² Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-(C₁-C₄-Alkyl)-carbamoyl, Fluor, Chlor, Brom oder Trifluormethyl ist,
R³ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-(C₁-C₄-Alkyl)-carbamoyl, Fluor, Chlor, Nitro, Sulfamoyl, N-(C₁-C₄-Alkyl)-sulfamoyl, Alkylsulfonyl von 1 bis 4 C-Atomen, Phenylsulfonyl oder Phenoxy ist,
p die Zahl Null, 1 oder 2 bedeutet (wobei diese Gruppe im Falle von p gleich Null ein Wasserstoffatom bedeutet) und
M die obengenannte Bedeutung hat;
D¹ ist ein Phenylenrest, der die obengenannten und definierten Substituenten R² und R³ besitzt, oder ist ein Naphthylenrest, der durch 1 oder 2 Sulfogruppen substituiert sein kann;
E¹ ist ein Rest der allgemeinen Formel (7a), (7b), (7c) oder (7d) 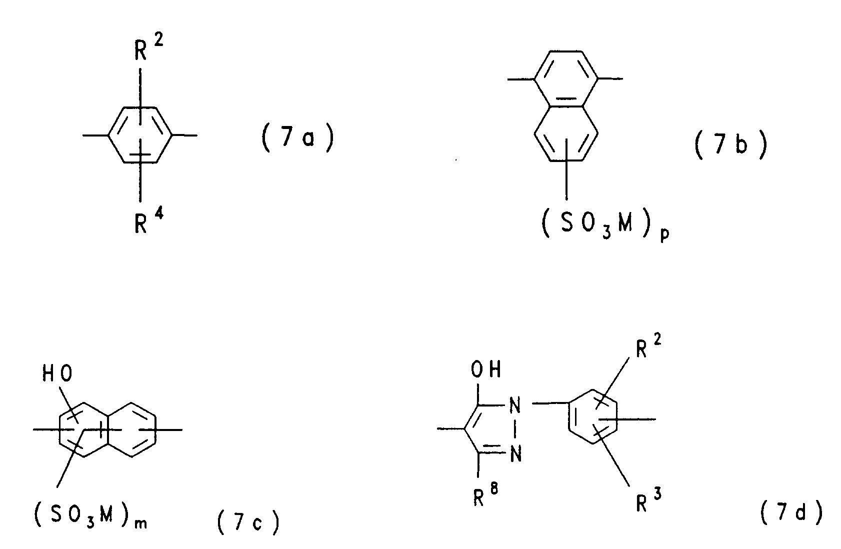 in welchen
R², R³, M und p die oben angegebenen Bedeutungen haben,
R⁴ ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N'-Phenyl-ureido-Gruppe, eine N'-Alkyl-ureido-Gruppe mit 1 bis 4 C-Atomen im Alkylrest, eine Phenylsulfonylgruppe oder eine Alkylsulfonylgruppe von 1 bis 4 C-Atomen ist,
m die Zahl 1 oder 2 bedeutet und
R⁸ eine der später angegebenen Bedeutungen besitzt;
-K*-Z ist ein Rest der allgemeinen Formel (8a), (8b), (8c), (8d), (8e) oder (8f) 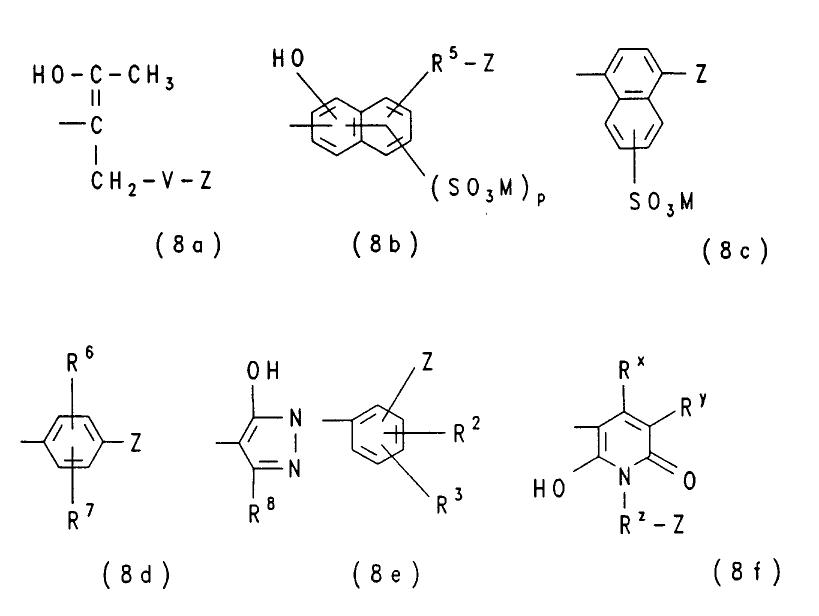 in welchen
R¹, R², R³, Z, p und M die obengenannten Bedeutungen haben und die Hydroxygruppe in Formel (8b) in ortho-Stellung zur freien Bindung, die mit der Azogruppe verbunden ist, steht,
V ein Phenylenrest ist, der die obengenannten und definierten Substituenten R² und R³ enthält, oder ein Naphthylenrest ist, der durch 1 oder 2 Sulfogruppen substituiert sein kann,
R⁵ eine direkte Bindung oder ein Rest der Formel -NH-CO-phenylen-, -NH-CO-NH-phenylen-, -N(CH₃)-CO-phenylen- oder -N(CH₃)-CO-NH-phenylen- ist,
R⁶ Wasserstoff, Alkyl von 1 bis 4 C-Atomen, Alkoxy von 1 bis 4 C-Atomen, Brom, Chlor oder Alkanoylamino von 2 bis 7 C-Atomen ist,
R⁷ Wasserstoff, Alkyl von 1 bis 4 C-Atomen, Alkoxy von 1 bis 4 C-Atomen, Alkanoylamino von 2 bis 7 C-Atomen oder eine Ureido- oder Phenylureidogruppe ist,
R⁸ für Wasserstoff, Alkyl von 1 bis 4 C-Atomen, Cyano, Carboxy, Carbalkoxy von 2 bis 5 C-Atomen, Carbonamido oder Phenyl steht,
R^{x} ein Wasserstoff oder eine Alkylgruppe von 1 bis 4 C-Atomen oder eine durch Alkoxy von 1 bis 4 C-Atomen oder Cyano substituierte Alkylgruppe von 1 bis 4 C-Atomen ist,
R^{y} ein Wasserstoffatom, eine Sulfogruppe oder eine Sulfoalkylgruppe mit einem Alkylenrest von 1 bis 4 C-Atomen oder eine Cyano- oder Carbamoylgruppe ist und
R^{z} eine Alkylengruppe von 1 bis 6 C-Atomen oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist;
D* ist ein Phenylenrest, der durch 1 oder 2 Substituenten aus der Gruppe Methyl, Ethyl, Methoxy, Brom, Chlor, Carboxy und Sulfo substituiert sein kann, oder ist ein Naphthylenrest, der durch 1 oder 2 Sulfogruppen substituiert sein kann;
K¹ ist ein Rest der allgemeinen Formel (9a), (9b) oder (9c) 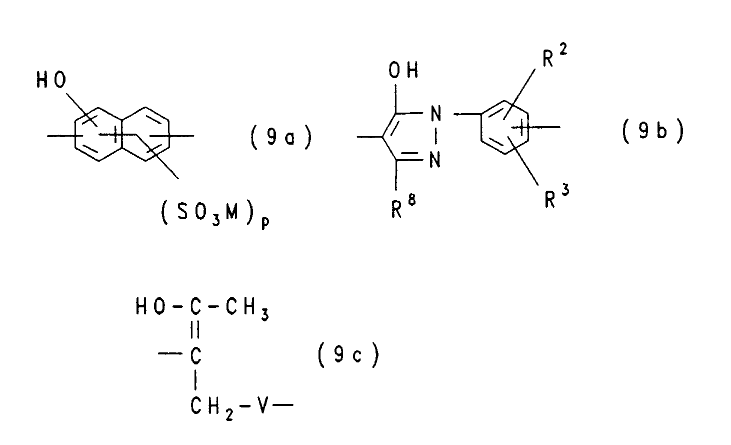 in welchen M, p, V, R², R³ und R⁸ die obengenannten Bedeutungen haben und die Hydroxygruppe in Formel (9a) in ortho-Stellung zur freien Bindung steht, die mit der Azogruppe verbunden ist.

2. Farbstoff nach Anspruch 1, dadurch gekennzeichnet, daß X¹ eine Gruppe der Formel -(CH₂)₃-CO-NH- oder eine direkt Bindung ist und X² eine Gruppe der Formel -NH-CO-(CH₂)₃- oder eine direkte Bindung ist.

3. Farbstoff nach Anspruch 1 oder 2, dadurch gekennzeichnet, daß Z eine Gruppe der Formel -NH-Z¹ ist, in welcher Z¹ eine Gruppe der allgemeinen Formel (4a) 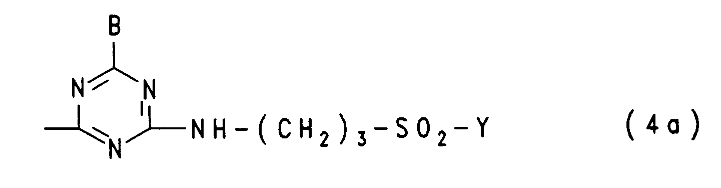 ist, in welcher B und Y die in Anspruch 1 genannten Bedeutungen haben.

4. Farbstoff nach mindestens einem der Ansprüche 1 bis 3, dadurch gekennzeichnet, daß B ein Chlor- oder Fluoratom ist.

5. Farbstoff nach mindestens einem der Ansprüche 1, 2 und 4, dadurch gekennzeichnet, daß X zusammen mit dem N-Atom den Piperazin-1,4-ylen- oder Piperidinylen-Rest bedeutet.

6. Farbstoff nach mindestens einem der Ansprüche 1, 2 und 4, dadurch gekennzeichnet, daß R die Methyl- oder Ethylgruppe oder bevorzugt ein Wasserstoffatom ist.

7. Farbstoff nach mindestens einem der Ansprüche 1, 2 und 4 bis 6, dadurch gekennzeichnet, daß R^{α} ein Wasserstoffatom ist.

8. Farbstoff nach mindestens einem der Ansprüche 1 bis 7, dadurch gekennzeichnet, daß Y die Vinylgruppe oder bevorzugt eine β-Sulfatoethyl- oder β-Chlorethyl-Gruppe ist.

9. Farbstoff nach Anspruch 1, dadurch gekennzeichnet, daß der Farbstoff eine Verbindung entsprechend der allgemeinen Formel (10) 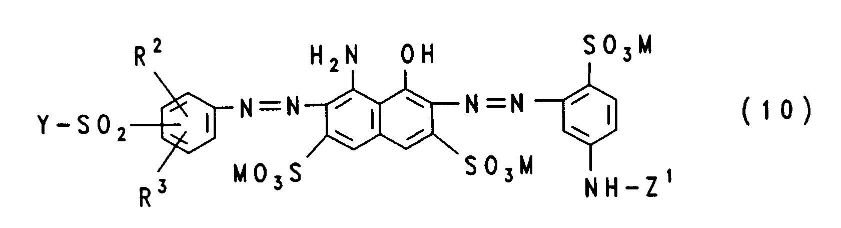 ist, in welcher
R² ein Wasserstoffatom oder eine Sulfo-, Carboxy-, Methoxy-, Ethoxy- oder Methylgruppe ist,
R³ ein Wasserstoffatom oder eine Methoxy-, Ethoxy- oder Methylgruppe ist,
Y die in Anspruch 1 genannte Bedeutung hat und bevorzugt die β-Sulfatoethyl-Gruppe ist,
M für ein Wasserstoffatom oder ein Alkalimetall steht und
Z¹ eine Gruppe der allgemeinen Formel 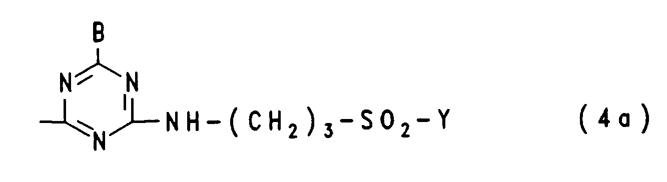 ist, in welcher
B die in Anspruch 1 genannte Bedeutung besitzt und bevorzugt ein Chlor- oder Fluoratom ist und
Y eine β-Sulfatoethyl- oder β-Chlorethyl-Gruppe ist.

10. Farbstoff nach Anspruch 1, dadurch gekennzeichnet, daß der Farbstoff eine Verbindung entsprechend der allgemeinen Formel (11) 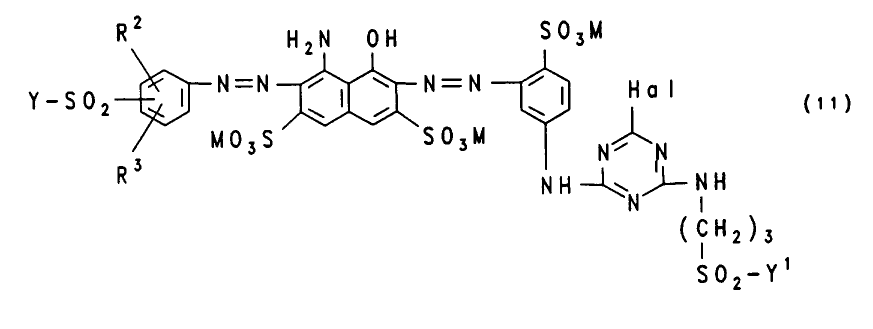 ist, in welcher
R² ein Wasserstoffatom oder eine Sulfo-, Carboxy-, Methoxy-, Ethoxy- oder Methylgruppe ist,
R³ ein Wasserstoffatom oder eine Methoxy-, Ethoxy- oder Methylgruppe ist,
Y die in Anspruch 1 genannte Bedeutung hat und bevorzugt die β-Sulfatoethyl-Gruppe ist,
M für ein Wasserstoffatom oder ein Alkalimetall steht,
Hal ein Chloratom oder bevorzugt ein Fluoratom ist und
Y¹ die β-Sulfatoethyl- oder bevorzugt die β-Chlorethyl-Gruppe ist.

11. Verfahren zur Herstellung eines in Anspruch 1 genannten und definierten Farbstoffes der allgemeinen Formel (1), dadurch gekennzeichnet, daß man die aus den Formeln (3c) als Farbstoffvorprodukte ersichtlichen Diazokomponenten der Formeln Y-SO₂-X¹--D^{o}-NH₂ bzw. H₂N-D^{o}-X²-SO₂-Y und Z-D^{o}-NH₂ bzw. die aus den Formeln (5a) bzw. (5c) als Farbstoffvorprodukte ersichtlichen Diazokomponenten der Formeln Y-SO₂-X¹-D¹-NH₂ bzw. Z-D*-NH₂ in Form ihrer Diazoniumsalze mit den aus den Formeln (3c), (5a) bzw. (5c) ersichtlichen weiteren Farbstoffkomponenten (diazotierbaren Kupplungskomponenten oder reinen Kupplungskomponenten) in üblicher Weise der Synthese von Disazofarbstoffen miteinander umsetzt,
oder daß man ein Cyanurhalogenid mit einer Verbindung der allgemeinen Formel (15) und mit einer Aminoverbindung der allgemeinen Formel (16) 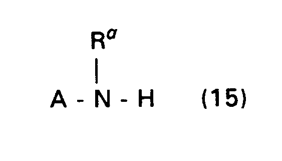
H-Q (16)
in welchen R^{α} und Q die in Anspruch 1 genannten Bedeutung haben und A ein Rest der Formel (15A-1), (15A-2), (15B) oder (15C) 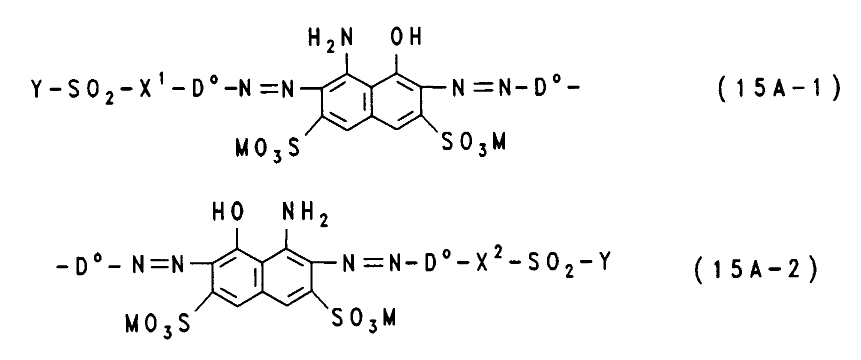
Y-SO₂-X¹-D¹-N=N-E¹-N=N-K*- (15B)
-D*-N=N-E¹-N=N-K¹-X²-SO₂-Y (15C)
ist, in welchen D^{o}, M, Y, X¹, X², D¹, E¹, K*, D* und K¹ eine der in Anspruch 1 genannten Bedeutungen haben, in beliebiger Folge umsetzt.

12. Verfahren nach Anspruch 11, dadurch gekennzeichnet, daß man eine Aminoverbindung der allgemeinen Formel (15) mit einem Cyanurhalogenid zur Halogentriazinylamino-Verbindung der allgemeinen Formel (17) 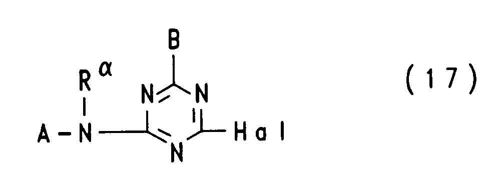 in welcher Hal ein Chlor- oder Fluoratom ist, B und R^{α} die in Anspruch 1 und A die in Anspruch 11 genannten Bedeutungen haben, umsetzt und diese durch Reaktion mit einer Aminoverbindung der allgemeinen Formel (16) in äquivalenter Menge in den Endfarbstoff der Formel (3c-1), (3c-2), (5a) bzw. (5c) überführt, oder daß man zunächst eine Aminoverbindung der allgemeinen Formel (16) mit einem Cyanurhalogenid zur Halogentriazinylaminoverbindung der allgemeinen Formel (18) 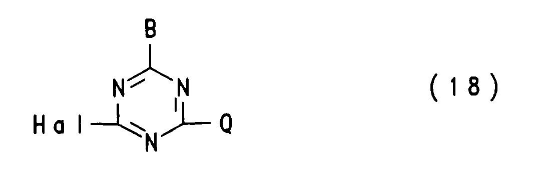 mit Hal, B und Q der oben bzw. in Anspruch 1 genannten Bedeutungen und diese in äquivalenter Menge mit einer Verbindung der allgemeinen Formel (15) zum Endfarbstoff der allgemeinen Formel (3c-1), (3c-2), (5a) bzw. (5c) umsetzt.

13. Verwendung eines Farbstoffes von mindestens einem der Ansprüche 1 bis 10 zum Färben und Bedrucken von hydroxy- und/oder carbonamidgruppenhaltigem Material, insbesondere Fasermaterial.

14. Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 10 einsetzt.

## Patentansprüche (Patentansprüche für folgende(n) Vertragsstaat(en): ES)

1. Verfahren zur Herstellung eines Farbstoffes der allgemeinen Formel (3c-1), (3c-2), (5a) und (5c) 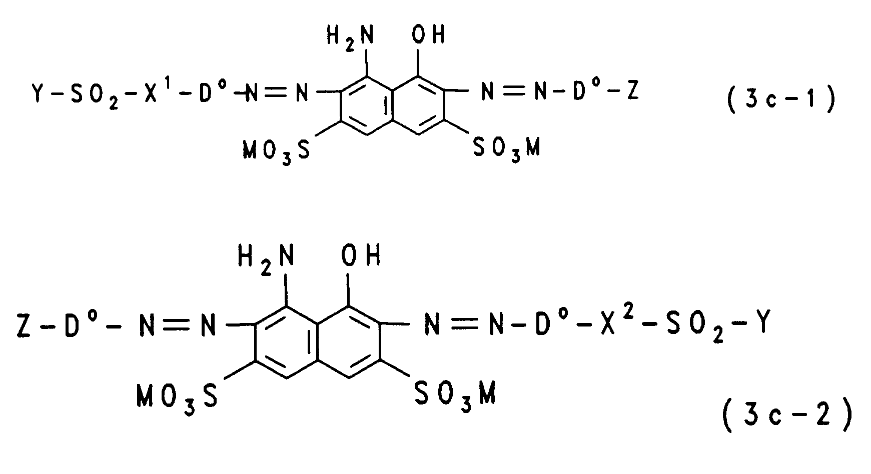
Y-SO₂-X¹-D¹-N=N-E¹-N=N-K*-Z (5a)
Z-D*-N=N-E¹-N=N-K¹-X²-SO₂-Y (5c)
in welchen bedeuten:
Y ist die Vinylgruppe oder eine β-Sulfatoethyl-, β-Halogenethyl-, β-Thiosulfatoethyl-, β-Phosphatoethyl- oder β-Acetoxyethyl-Gruppe;
Z ist ein Rest der allgemeinen Formel (4) 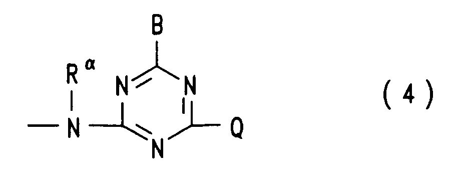 worin bedeuten:
R^{α} ist ein Wasserstoffatom oder eine geradkettige oder verzweigte Alkylgruppe von 1 bis 4 C-Atomen, die durch eine Carboxy-, Sulfo-, Cyano- oder Hydroxygruppe oder durch ein Chloratom substituiert sein kann;
B ist Fluor, Chlor, Brom, Alkylsulfonyl von 1 bis 4 C-Atomen, Phenylsulfonyl, Methoxy oder Sulfo;
Q ist eine Gruppe der allgemeinen Formel (2a) oder (2b) 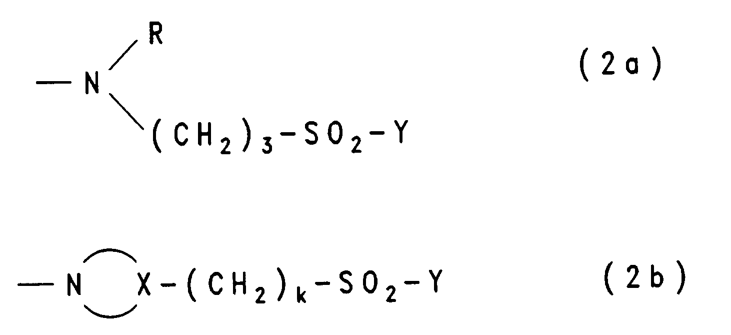 in welchen
R ein Wasserstoffatom oder eine Alkylgruppe von 1 bis 4 C-Atomen ist,
Y eine der obengenannten Bedeutungen hat,
k für die Zahl Null, 1, 2, 3 oder 4 steht und
X zusammen mit dem N-Atom und 1 oder 2 Alkylengruppen von 1 bis 5 C-Atomen und gegebenenfalls 1 oder 2 Heteroatomen den bivalenten Rest eines heterocyclischen Ringes bildet;
M ist ein Wasserstoffatom oder ein Alkalimetall;
X¹ ist eine direkte Bindung oder eine Alkylengruppe von 1 bis 4 C-Atomen oder der bivalente Rest einer Alkanoylamido-Gruppe von 2 bis 5 C-Atomen;
X² hat eine der für X¹ angegebenen Bedeutungen;
D^{o} ist ein Rest der allgemeinen Formel (6a), (6b) oder (6c) 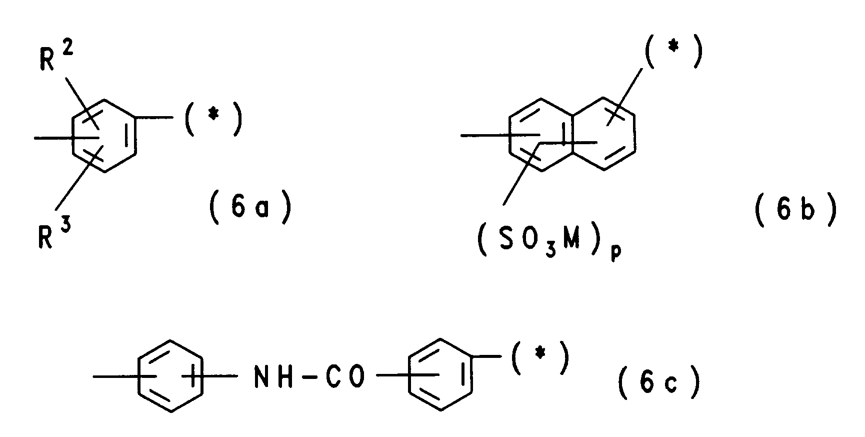 in welchen
die mit (*) versehene Bindung zur Azogruppe führt,
R² Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-(C₁-C₄-Alkyl)-carbamoyl, Fluor, Chlor, Brom oder Trifluormethyl ist,
R³ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-(C₁-C₄-Alkyl)-carbamoyl, Fluor, Chlor, Nitro, Sulfamoyl, N-(C₁ -C₄-Alkyl)-sulfamoyl, Alkylsulfonyl von 1 bis 4 C-Atomen, Phenylsulfonyl oder Phenoxy ist,
p die Zahl Null, 1 oder 2 bedeutet (wobei diese Gruppe im Falle von p gleich Null ein Wasserstoffatom bedeutet) und
M die obengenannte Bedeutung hat;
D¹ ist ein Phenylenrest, der die obengenannten und definierten Substituenten R² und R³ besitzt, oder ist ein Naphthylenrest, der durch 1 oder 2 Sulfogruppen substituiert sein kann;
E¹ ist ein Rest der allgemeinen Formel (7a), (7b), (7c) oder (7d) 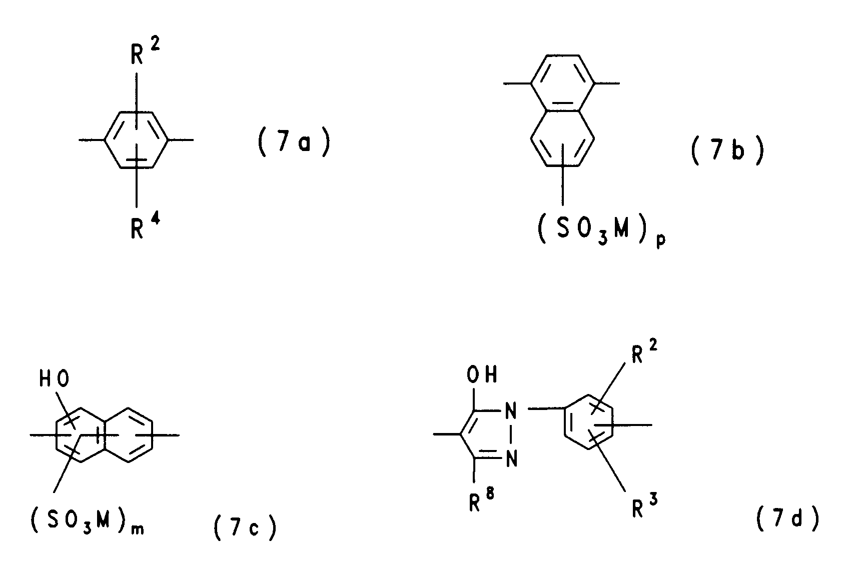 in welchen
R², R³, M und p die oben angegebenen Bedeutungen haben,
R⁴ ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N'-Phenyl-ureido-Gruppe, eine N'-Alkyl-ureido-Gruppe mit 1 bis 4 C-Atomen im Alkylrest, eine Phenylsulfonylgruppe oder eine Alkylsulfonylgruppe von 1 bis 4 C-Atomen ist,
m die Zahl 1 oder 2 bedeutet und
R⁸ eine der später angegebenen Bedeutungen besitzt;
-K*-Z ist ein Rest der allgemeinen Formel (8a), (8b), (8c), (8d), (8e) oder (8f) 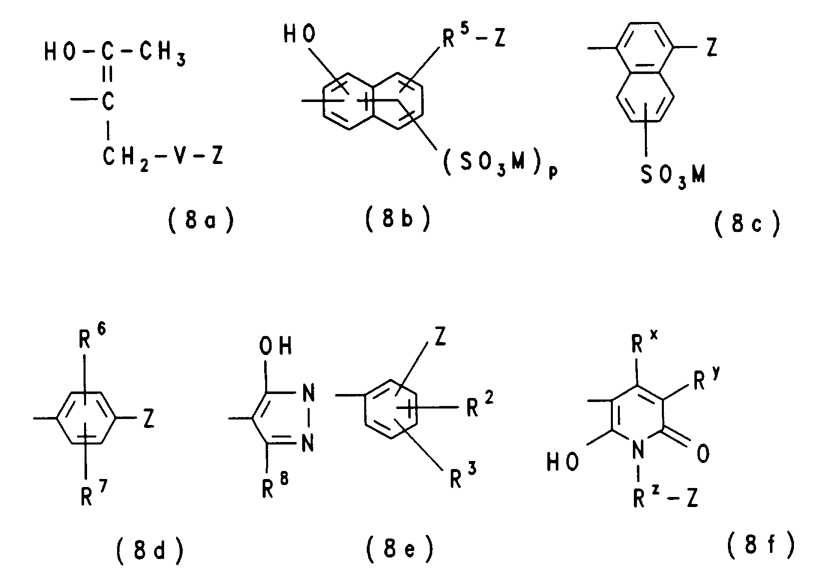 in welchen
R¹, R², R³, Z, p und M die obengenannten Bedeutungen haben und die Hydroxygruppe in Formel (8b) in ortho-Stellung zur freien Bindung, die mit der Azogruppe verbunden ist, steht,
V ein Phenylenrest ist, der die obengenannten und definierten Substituenten R² und R³ enthält, oder ein Naphthylenrest ist, der durch 1 oder 2 Sulfogruppen substituiert sein kann,
R⁵ eine direkte Bindung oder ein Rest der Formel -NH-CO-phenylen-, -NH-CO-NH-phenylen-, -N(CH₃)-CO-phenylen- oder -N(CH₃)-CO-NH-phenylen- ist,
R⁶ Wasserstoff, Alkyl von 1 bis 4 C-Atomen, Alkoxy von 1 bis 4 C-Atomen, Brom, Chlor oder Alkanoylamino von 2 bis 7 C-Atomen ist,
R⁷ Wasserstoff, Alkyl von 1 bis 4 C-Atomen, Alkoxy von 1 bis 4 C-Atomen, Alkanoylamino von 2 bis 7 C-Atomen oder eine Ureido- oder Phenylureidogruppe ist,
R⁸ für Wasserstoff, Alkyl von 1 bis 4 C-Atomen, Cyano, Carboxy, Carbalkoxy von 2 bis 5 C-Atomen, Carbonamido oder Phenyl steht,
R^{x} ein Wasserstoff oder eine Alkylgruppe von 1 bis 4 C-Atomen oder eine durch Alkoxy von 1 bis 4 C-Atomen oder Cyano substituierte Alkylgruppe von 1 bis 4 C-Atomen ist,
R^{y} ein Wasserstoffatom, eine Sulfogruppe oder eine Sulfoalkylgruppe mit einem Alkylenrest von 1 bis 4 C-Atomen oder eine Cyano- oder Carbamoylgruppe ist und
R^{z} eine Alkylengruppe von 1 bis 6 C-Atomen oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist;
D* ist ein Phenylenrest, der durch 1 oder 2 Substituenten aus der Gruppe Methyl, Ethyl, Methoxy, Brom, Chlor, Carboxy und Sulfo substituiert sein kann, oder ist ein Naphthylenrest, der durch 1 oder 2 Sulfogruppen substituiert sein kann;
K¹ ist ein Rest der allgemeinen Formel (9a), (9b) oder (9c) 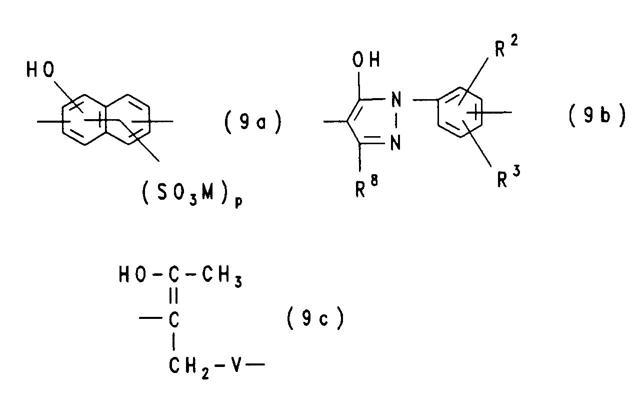 in welchen M, p, V, R², R³ und R⁸ die obengenannten Bedeutungen haben und die Hydroxygruppe in Formel (9a) in ortho-Stellung zur freien Bindung steht, die mit der Azogruppe verbunden ist, dadurch gekennzeichnet, daß man die aus den Formeln (3c) als Farbstoffvorprodukte ersichtlichen Diazokomponenten der Formeln Y-SO₂-X¹-D^{o}-NH₂ bzw. H₂N-D^{o}-X²-SO₂-Y und Z-D^{o}-NH₂ bzw. die aus den Formeln (5a) bzw. (5c) als Farbstoffvorprodukte ersichtlichen Diazokomponenten der Formeln Y-SO₂-X¹-D¹-NH₂ bzw. Z-D*-NH₂ in Form ihrer Diazoniumsalze mit den aus den Formeln (3c), (5a) bzw. (5c) ersichtlichen weiteren Farbstoffkomponenten (diazotierbaren Kupplungskomponenten oder reinen Kupplungskomponenten) in üblicher Weise der Synthese von Disazofarbstoffen miteinander umsetzt, oder daß man ein Cyanurhalogenid mit einer Verbindung der allgemeinen Formel (15) und mit einer Aminoverbindung der allgemeinen Formel (16) 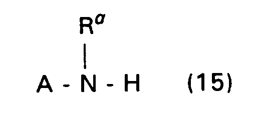
H-Q (16)
in welchen R^{α} und Q die obengenannte Bedeutung haben und und A ein Rest der Formel (15A-1), (15A-2), (15B) oder (15C) 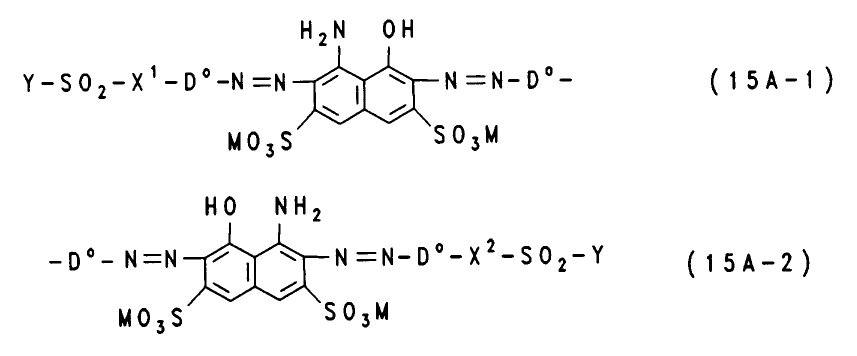
Y-SO₂-X¹-D¹-N=N-E¹-N=N-K*- (15B)
-D*-N=N-E¹-N=N-K¹-X²-SO₂-Y (15C)
ist, in welchen D^{o}, M, Y, X¹, X², D¹, E¹, K*, D* und K¹ eine der obengenannten Bedeutungen haben, in beliebiger Folge umsetzt.

2. Verfahren nach Anspruch 1, dadurch gekennzeichnet, daß man eine Aminoverbindung der allgemeinen Formel (15) mit einem Cyanurhalogenid zur Halogentriazinylamino-Verbindung der allgemeinen Formel (17) 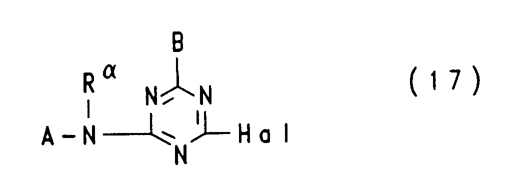 in welcher Hal ein Halogenatom ist und A, B und R^{α} die in Anspruch 1 genannten Bedeutungen haben, umsetzt und diese durch Reaktion mit einer Aminoverbindung der allgemeinen Formel (16) in äquivalenter Menge in den Endfarbstoff der Formel (3c-1), (3c-2), (5a) bzw. (5c) überführt, oder daß man zunächst eine Aminoverbindung der allgemeinen Formel (16) mit einem Cyanurhalogenid zur Halogentriazinylaminoverbindung der allgemeinen Formel (18) 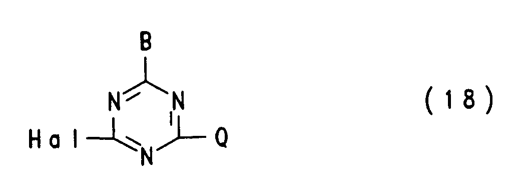 mit Hal, B und Q der oben bzw. in Anspruch 1 genannten Bedeutungen und diese in äquivalenter Menge mit einer Verbindung der allgemeinen Formel (15) zum Endfarbstoff der allgemeinen Formel (3c-1), (3c-2), (5a) bzw. (5c) umsetzt.

3. Verfahren nach Anspruch 1 oder 2, dadurch gekennzeichnet, daß X¹ eine Gruppe der Formel -(CH₂)₃-CO-NH- oder eine direkt Bindung ist.

4. Verfahren nach mindestens einem der Ansprüche 1 bis 3, dadurch gekennzeichnet, daß Z eine Gruppe der Formel -NH-Z¹ ist, in welcher Z¹ eine Gruppe der allgemeinen Formel (4a) 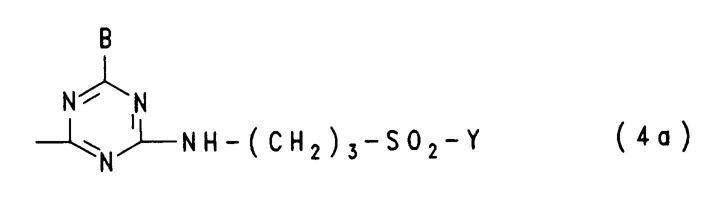 ist, in welcher B und Y die in Anspruch 1 genannten Bedeutungen haben.

5. Verfahren nach mindestens einem der Ansprüche 1 bis 4, dadurch gekennzeichnet, daß B ein Chlor- oder Fluoratom ist.

6. Verfahren nach mindestens einem der Ansprüche 1, 2, 3 und 5, dadurch gekennzeichnet, daß X zusammen mit dem N-Atom den Piperazin-1,4-ylen- oder Piperidinylen-Rest bedeutet.

7. Verfahren nach mindestens einem der Ansprüche 1, 2, 3 und 5, dadurch gekennzeichnet, daß R die Methyl- oder Ethylgruppe oder bevorzugt ein Wasserstoffatom ist.

8. Verfahren nach mindestens einemder Ansprüche 1, 2, 3 und 5 bis 7, dadurch gekennzeichnet, daß R^{α} ein Wasserstoffatom ist.

9. Verfahren nach mindestens einem der Ansprüche 1 bis 8, dadurch gekennzeichnet, daß Y die Vinylgruppe oder bevorzugt eine β-Sulfatoethyl- oder β-Chlorethyl-Gruppe ist.

10. Verfahren nach Anspruch 1 oder 2, dadurch gekennzeichnet, daß der synthetisierte Farbstoff eine Verbindung entsprechend der allgemeinen Formel (10) 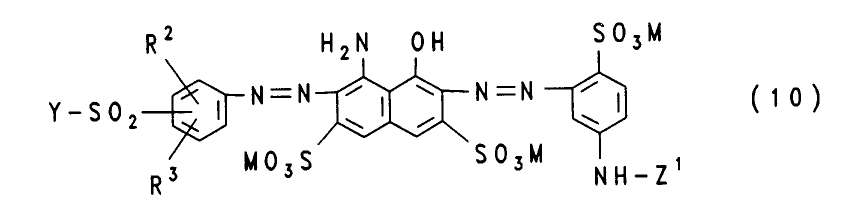 ist, in welcher
R² ein Wasserstoffatom oder eine Sulfo-, Carboxy-, Methoxy-, Ethoxy- oder Methylgruppe ist,
R³ ein Wasserstoffatom oder eine Methoxy-, Ethoxy- oder Methylgruppe ist,
Y die in Anspruch 1 genannte Bedeutung hat und bevorzugt die β-Sulfatoethyl-Gruppe ist,
M für ein Wasserstoffatom oder ein Alkalimetall steht und
Z¹ eine Gruppe der allgemeinen Formel 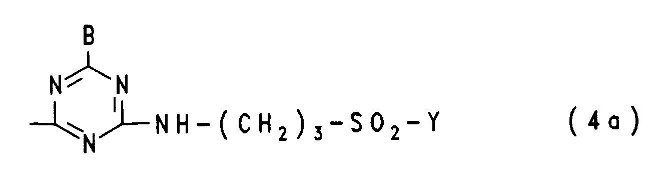 ist, inwelcher
B die in Anspruch 1 genannte Bedeutung besitzt und bevorzugt ein Chlor- oder Fluoratom ist und
Y eine β-Sulfatoethyl- oder β-Chlorethyl-Gruppe ist.

11. Verfahren nach Anspruch 1 oder 2, dadurch gekennzeichnet, daß der synthetisierte Farbstoff eine Verbindung entsprechend der allgemeinen Formel (11) 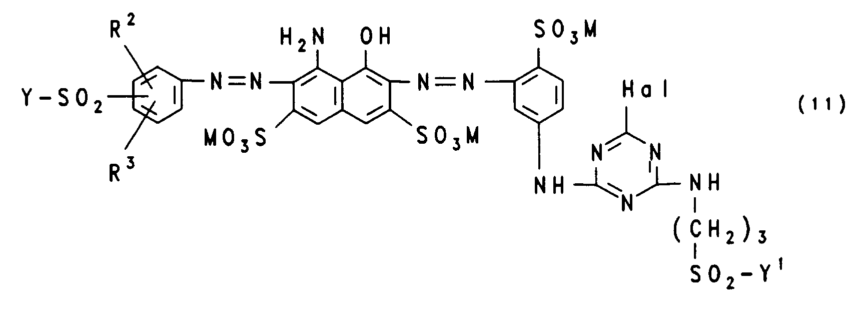 ist, in welcher
R² ein Wasserstoffatom oder eine Sulfo-, Carboxy-, Methoxy-, Ethoxy- oder Methylgruppe ist,
R³ ein Wasserstoffatom oder eine Methoxy-, Ethoxy- oder Methylgruppe ist,
Y die in Anspruch 1 genannte Bedeutung hat und bevorzugt die β-Sulfatoethyl-Gruppe ist,
M für ein Wasserstoffatom oder ein Alkalimetall steht,
Hal ein Chloratom oder bevorzugt ein Fluoratom ist und
Y¹ die β-Sulfatoethyl- oder bevorzugt die β-Chlorethyl-Gruppe ist.

12. Verfahren zum Kolorieren (Färben, einschließlich Bedrucken) Von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 11 einsetzt.

## Claims (Claims for the following Contracting State(s): DE, GB, FR, IT, CH, LI, BE)

1. Dye having the general formula (3c-1), (3c-2), (5a) and (5c) 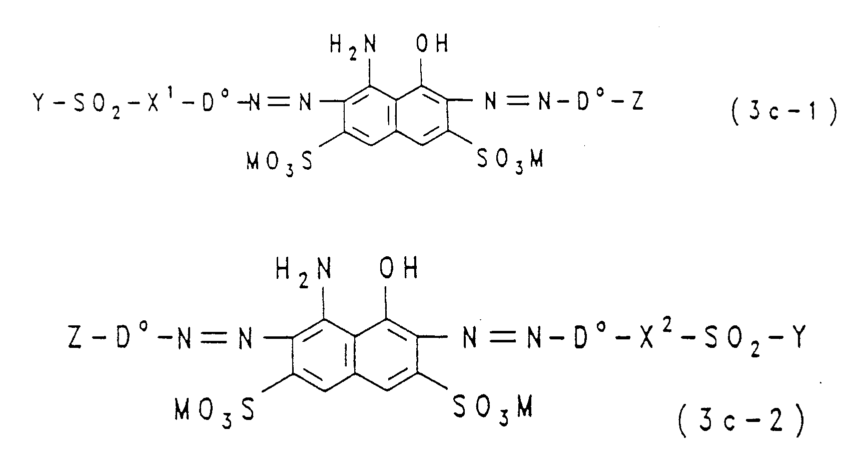
Y-SO₂-X¹-D¹-N=N-E¹-N=N-K*-Z (5a)
Z-D*-N=N-E¹-N=N-K¹-X²-SO₂-Y (5c)
in which
Y is the vinyl group or a β-sulfatoethyl, β-halogenethyl, β-thiosulfatoethyl, β-phosphatoethyl or β-acetoxyethyl group;
Z is a radical having the general formula (4) 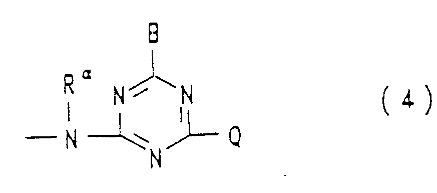 in which
R^{α} is a hydrogen atom or a straight-chain or branched alkyl group having 1 to 4 C atoms which can be substituted by a carboxy, sulfo, cyano or hydroxy group or by a chlorine atom;
B is fluorine, chlorine, bromine or alkylsulfonyl having 1 to 4 C atoms, phenylsulfonyl , methoxy or sulfo;
Q is a group having the general formula (2a) or (2b) 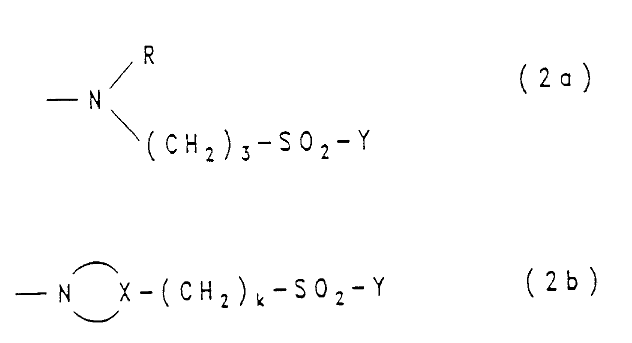 in which
R is a hydrogen atom or an alkyl group having 1 to 4 C atoms,
Y has one of the above-named meanings,
k represents the number zero, 1, 2, 3 or 4 and
X together with the N atom and 1 or 2 alkylene groups of 1 to 5 C atoms and optionally 1 or 2 hetero atoms forms the bivalent radical of a heterocyclic ring;
M is a hydrogen atom or an alkali metal;
X¹ is a direct linkage or an alkylene group of 1 to 4 C atoms or the bivalent radical of an alkanoylamido group of 2 to 5 C atoms;
X² has one of the meanings given for X¹;
D° is a radical having the general formula (6a), (6b) or (6c) 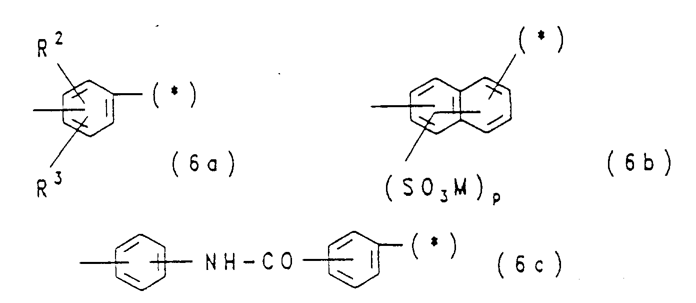 in which
the bond indicated with (*) leads to the azo group,
R² is hydrogen, methyl, ethyl, methoxy, ethoxy, alkanoyl having 2 to 5 C atoms, cyano, carboxy, sulfo, alkoxycarbonyl having 2 to 5 C atoms, carbamoyl, N-(C₁-C₄-alkyl)-carbamoyl, fluorine, chlorine, bromine or trifluoromethyl,
R³ is hydrogen, methyl, ethyl, methoxy, ethoxy, cyano, carboxy, sulfo , alkanoylamino having 2 to 5 C atoms, alkoxycarbonyl having 2 to 5 C atoms, carbamoyl, N-(C₁-C₄-alkyl)-carbamoyl, fluorine, chlorine, nitro, sulfamoyl, N-(C₁-C₄-alkyl)-sulfamoyl, alkylsulfonyl having 1 to 4 C atoms, phenylsulfonyl or phenoxy,
p is the number zero, 1 or 2 (whereby this group represents a hydrogen atom in the event of p being zero) and
M has the above-mentioned meaning;
D¹ is a phenylene radical that possesses the above-mentioned and defined substituents R² and R³, or is a naphthylene radical which can be substituted by 1 or 2 sulfo groups;
E¹ is a radical having the general formula (7a), (7b), (7c) or (7d) 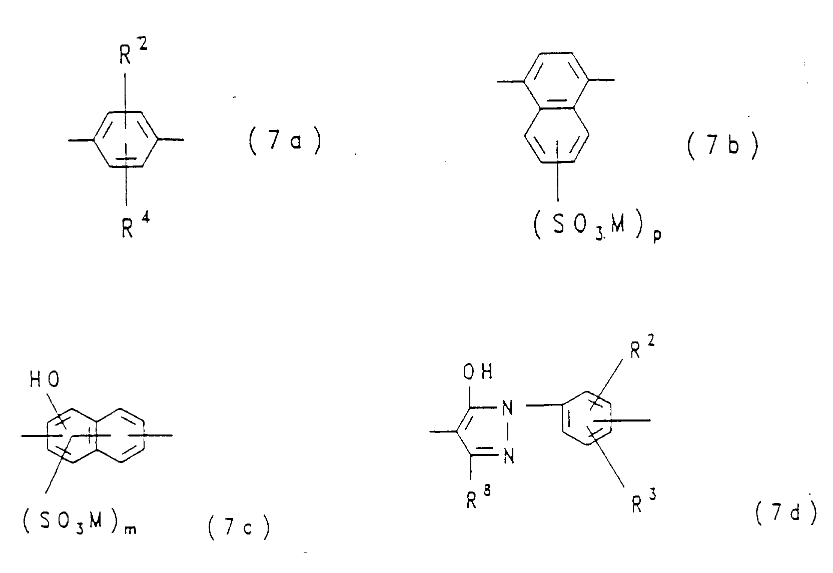 in which
R², R³, M and p have the meanings given in the foregoing,
R⁴ is a hydrogen atom, an alkyl group having 1 to 4 C atoms, an alkoxy group having 1 to 4 C atoms, a chlorine atom, an alkanoylamino group having 2 to 5 C atoms, the benzoylamino group, the ureido group, a N'-phenylureido group, a N'-alkylureido group having 1 to 4 C atoms in the alkyl radical, a phenylsulfonyl group or an alkylsulfonyl group having 1 to 4 C atoms,
m represents the number 1 or 2 and
R⁸ possesses one of the meanings given later;
-K*-Z is a radical having the general formula (8a), (8b), (8c), (8d), (8e) or (8f) 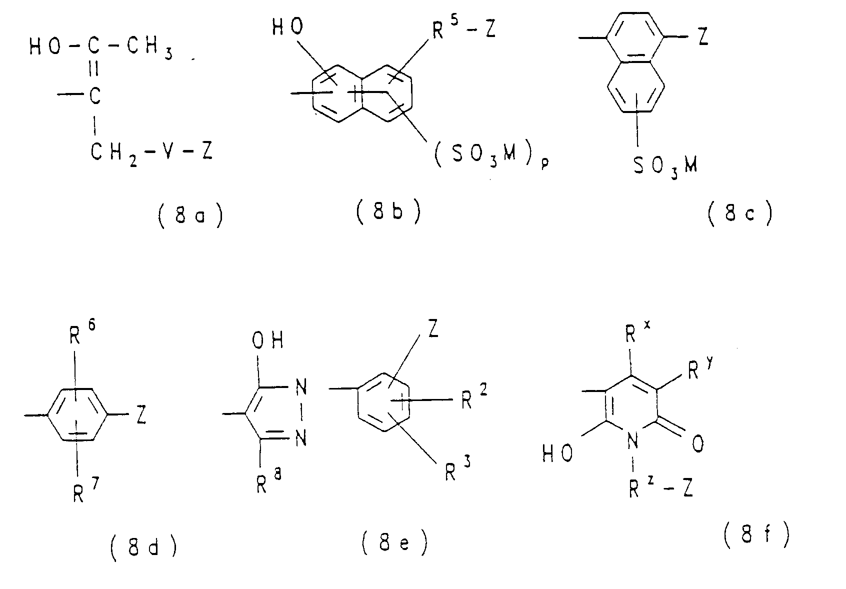 in which
R¹, R², R³, Z, p and M have the meanings given in the foregoing and the hydroxy group in formula (8b) is in the ortho position relative to the free bond which is linked to the azo group,
V is a phenylene radical which contains the above-mentioned and defined substituents R² and R³ or is a naphthylene radical which can be substituted by 1 or 2 sulfo groups,
R⁵ is a direct bond or a radical having the formula -NH-CO-phenylene-, -NH-CO-NH-phenylene, -N(CH₃)-CO-phenylene or -N(CH₃)-CO-NH-phenylene,
R⁶ is hydrogen, alkyl having 1 to 4 C atoms, alkoxy having 1 to 4 C atoms, bromine, chlorine or alkanoylamino having 2 to 7 C atoms,
R⁷ is hydrogen, alkyl having 1 to 4 C atoms, alkoxy having 1 to 4 C atoms, alkanoylamino having 2 to 7 atoms or a ureido or phenylureido group,
R⁸ is hydrogen, alkyl having 1 to 4 C atoms, cyano, carboxy, carbalkoxy having 2 to 5 C atoms, carbonamido or phenyl,
R^{x} is a hydrogen or alkyl group having 1 to 4 C atoms,or an alkyl group having 1 to 4 C atoms substituted by alkoxy having 1 to 4 C atoms or by cyano,
R^{y} is a hydrogen atom, a sulfo group or a sulfoalkyl group with an alkylene radical having 1 to 4 C atoms or a cyano or carbamoyl group, and
R^{z} is an alkylene group having 1 to 6 C atoms or a phenylene radical that can be substituted by substituents from the group comprising methyl, ethyl, chlorine, carboxy and sulfo, or is an alkylenephenylene radical with 2 to 4 C atoms in the alkylene radical;
D* is a phenylene radical that can be substituted by 1 or 2 substituents from the group comprising methyl, ethyl, methoxy, bromine, chlorine, carboxy and sulfo, or is a naphthylene radical that can be substituted by 1 or 2 sulfo groups;
K¹ is a radical having the general formula (9a), (9b) or (9c) 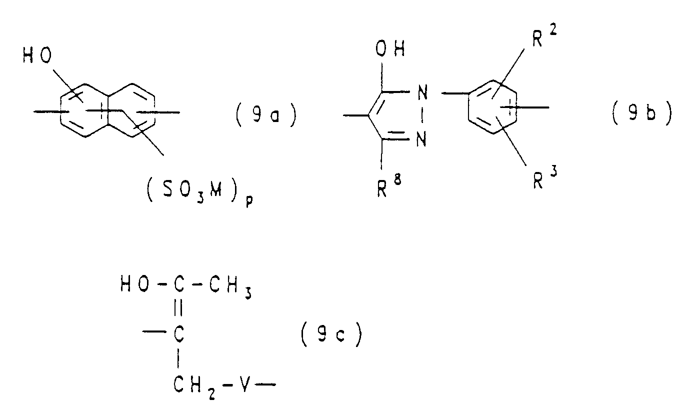 in which M, p, V, R², R³ and R⁸ have the above-named meanings and the hydroxy group in formula (9a) is in the ortho position relative to the free bond that is linked to the azo group.

2. Dye in accordance with Claim 1, characterized by the fact that X¹ is a group having the formula -(CH₂)₃-CO-NH- or is a direct bond and X² is a group having the formula -NH-CO-(CH₂)₃- or is a direct bond.

3. Dye in accordance with Claim 1 or 2, characterized by the fact that Z is a group having the formula -NH-Z¹, in which Z¹ is a group having the general formula (4a) 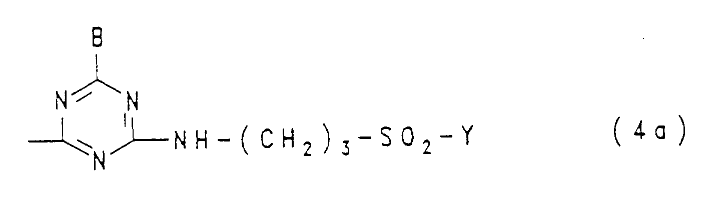 in which B and Y have the meanings given in Claim 1.

4. Dye in accordance with at least one of the Claims 1 to 3, characterized by the fact that B is a chlorine or fluorine atom.

5. Dye in accordance with at least one of the Claims 1, 2 and 4, characterized by the fact that X together with the N atom represents the piperazine-1,4-ylene or piperidinylene radical.

6. Dye in accordance with at least one of the Claims 1, 2 and 4, characterized by the fact that R is the methyl or ethyl group or, preferably, a hydrogen atom.

7. Dye in accordance with at least one of the Claims 1, 2 and 4 to 6, characterized by the fact that R^{α} is a hydrogen atom.

8. Dye in accordance with at least one of the Claims 1 to 7, characterized by the fact that Y is the vinyl group or, preferably, a β-sulfatoethyl or β-chloroethyl group.

9. Dye in accordance with Claim 1, characterized by the fact that the dye is a compound corresponding to the general formula (10) 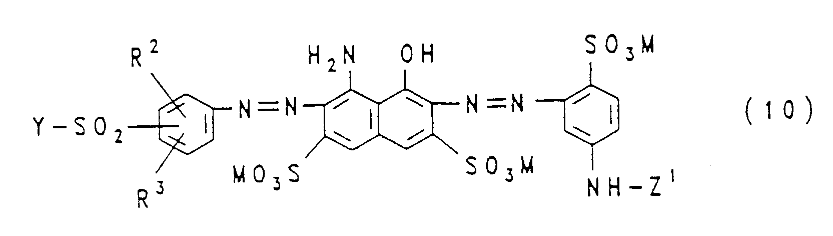 in which
R² is a hydrogen atom or a sulfo, carboxy, methoxy, ethoxy or methyl group,
R³ is a hydrogen atom or a methoxy, ethoxy or methyl group,
Y has the meaning stated in Claim 1 and is preferably the β-sulfatoethyl group,
M represents a hydrogen atom or an alkali metal and
Z¹ is a group having the general formula 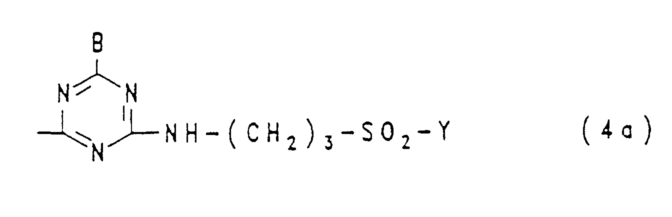 in which
B has the meaning stated in Claim 1 and is preferably a chlorine or fluorine atom and
Y is a β-sulfatoethyl or β-chloroethyl group.

10. Dye in accordance with Claim 1, characterized by the fact that the dye is a compound corresponding to the general formula (11) 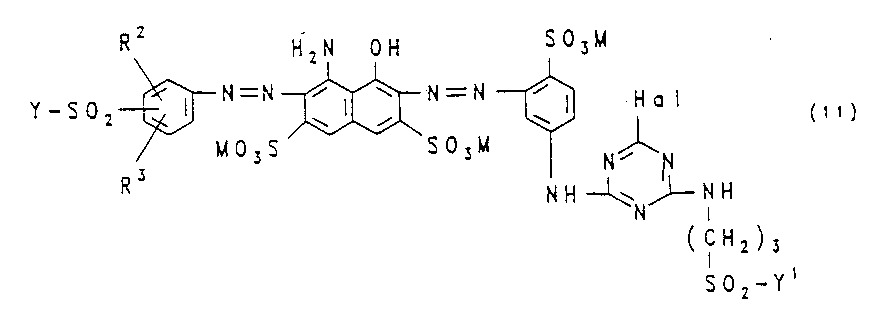 in which
R² is a hydrogen atom or a sulfo, carboxy, methoxy or ethoxy or methyl group,
R³ is a hydrogen atom or a methoxy, ethoxy or methyl group,
Y has the meaning stated in Claim 1 and is preferably the β-sulfatoethyl group,
M represents a hydrogen atom or an alkali metal,
Hal is a chlorine atom or preferably a fluorine atom and
Y¹ is the β-sulfatoethyl or preferably the β-chloroethyl group.

11. Process for the production of the dye stated and defined in Claim 1 and having the general formula (1), characterized by the fact that the diazo components having the formulae Y-SO₂-X¹-D°-NH₂ or H₂N-D°-X²-SO₂-Y and Z-D°-NH₂ and seen from the formulae (3c) to be dye starting products,or the diazo components having the formulae Y-SO₂-X¹-D¹-NH₂ or Z-D*-NH₂ and seen from the formulae (5a) and (5c) to be dye starting products are reacted in the form of their diazonium salts with the other dye components seen from the formulae (3c), (5a) and (5c) (diazotizable coupling components or pure coupling components) in the usual manner employed in the synthesis of disazo dyes,
or by the fact that a cyanuric halogenide is reacted in any order with a compound having the general formula (15) and with an amino compound having the general formula (16) 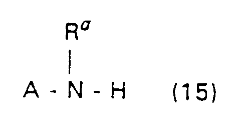
H-Q (16)
in which R^{α} and Q have the meaning stated in Claim 1 and A is a radical having the formula (15A-1), 15A-2), (15B) or (15C) 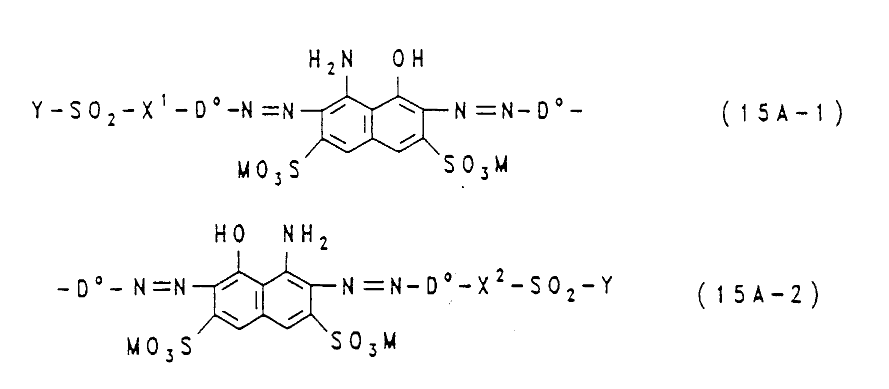
Y-SO₂-X¹-D¹-N=N-E¹-N=N-K*- (15B)
-D*-N=N-E¹-N=N-K¹-X²-SO₂-Y (15C)
in which D°, M, Y, X¹, X², D¹, E¹, K*, D* and K¹ have one of the meanings stated in Claim 1.

12. Process in accordance with Claim 11, characterized by the fact that an amino compound having the general formula (15) is reacted with a cyanuric halogenide to form a halogen triazinylamino compound having the general formula (17) 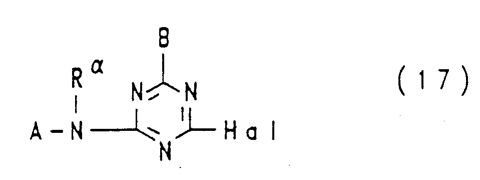 in which Hal is a chlorine or fluorine atom, B and R^{α} have the meanings Stated in Claim 1 and A the meaning stated in Claim 11, and this is converted in equivalent amount by reaction with an amino compound having the general formula (16) into the end dye having the formula (3c-1), (3c-2), (5a) or (5c), or that an amino compound having the general formula (16) is first reacted with a cyanuric halogenide to yield a halogen triazinylamino compound having the general formula (18) 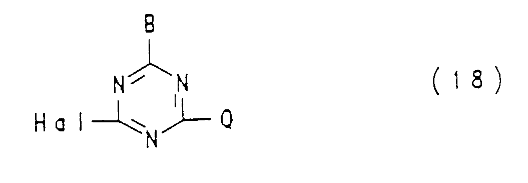 where Hal, B and Q have the meanings stated above or in Claim 1, and this is reacted in equivalent amount with a compound having the general formula (15) to yield the end dye having the general formula (3c-1), (3c-2), (5a) or (5c).

13. Use of a dye from at least one of the Claims 1 to 10 for the dyeing and printing of material, especially fibre material, containing hydroxy and/or carbonamide groups.

14. Process for the colouring (dyeing, including printing) of material, preferably fibre material, containing hydroxy and/or carbonamide groups, in which a dye is applied to the material or introduced into the material and the dye is fixed on or in the material by means of heat and with the aid of an alkaline agent,
characterized by the fact that the dye used is a dye from at least one of the Claims 1 to 10.

## Claims (Claims for the following Contracting State(s): ES)

1. Dye having the general formula (3c-1), (3c-2), (5a) and (5c) 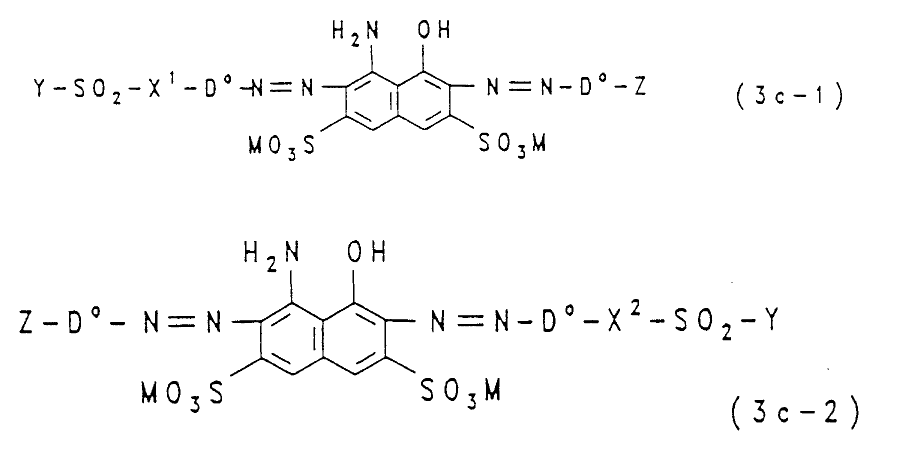
Y-SO₂-X¹-D¹-N=N-E¹-N=N-K*-Z (5a)
Z-D*-N=N-E¹-N=N-K¹-X²-SO₂-Y (5c)
in which
Y is the vinyl group or a β-sulfatoethyl, β-halogenethyl, β-thiosulfatoethyl, β-phosphatoethyl or β-acetoxyethyl group;
Z is a radical having the general formula (4) 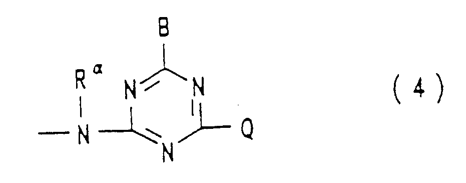 in which
R^{α} is a hydrogen atom or a straight-chain or branched alkyl group having 1 to 4 C atoms which can be substituted by a carboxy, sulfo, cyano or hydroxy group or by a chlorine atom;
B is fluorine, chlorine, bromine or alkylsulfonyl having 1 to 4 C atoms, phenylsulfonyl , methoxy or sulfo;
Q is a group having the general formula (2a) or (2b) 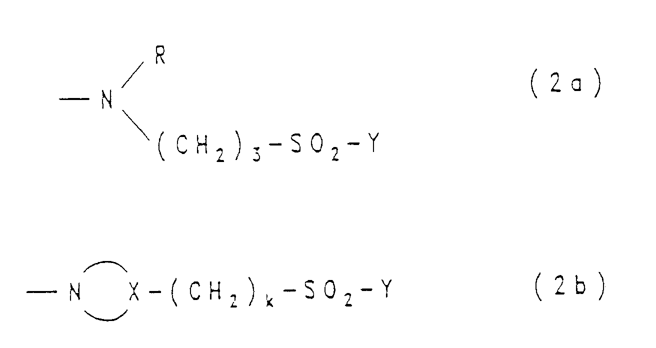 in which
R is a hydrogen atom or an alkyl group having 1 to 4 C atoms,
Y has one of the above-named meanings,
k represents the number zero, 1, 2, 3 or 4 and
X together with the N atom and 1 or 2 alkylene groups of 1 to 5 C atoms and optionally 1 or 2 hetero atoms forms the bivalent radical of a heterocyclic ring;
M is a hydrogen atom or an alkali metal;
X¹ is a direct linkage or an alkylene group of 1 to 4 C atoms or the bivalent radical of an alkanoylamido group of 2 to 5 C atoms;
X² has one of the meanings given for X¹;
D° is a radical having the general formula (6a), (6b) or (6c) 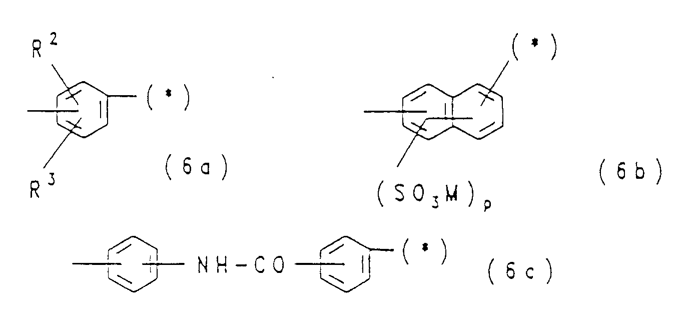 in which
the bond indicated with (*) leads to the azo group,
R² is hydrogen, methyl, ethyl, methoxy, ethoxy, alkanoyl having 2 to 5 C atoms, cyano, carboxy, sulfo, alkoxycarbonyl having 2 to 5 C atoms, carbamoyl, N-(C₁-C₄-alkyl)-carbamoyl, fluorine, chlorine, bromine or trifluoromethyl,
R³ is hydrogen, methyl, ethyl, methoxy, ethoxy, cyano, carboxy, sulfo , alkanoylamino having 2 to 5 C atoms, alkoxycarbonyl having 2 to 5 C atoms, carbamoyl, N-(C₁-C₄-alkyl)-carbamoyl, fluorine, chlorine, nitro, sulfamoyl, N-(C₁-C₄-alkyl)-sulfamoyl, alkylsulfonyl having 1 to 4 C atoms, phenylsulfonyl or phenoxy,
p is the number zero, 1 or 2 (whereby this group represents a hydrogen atom in the event of p being zero) and
M has the above-mentioned meaning;
D¹ is a phenylene radical that possesses the above-mentioned and defined substituents R² and R³, or is a naphthylene radical which can be substituted by 1 or 2 sulfo groups;
E¹ is a radical having the general formula (7a), (7b), (7c) or (7d) 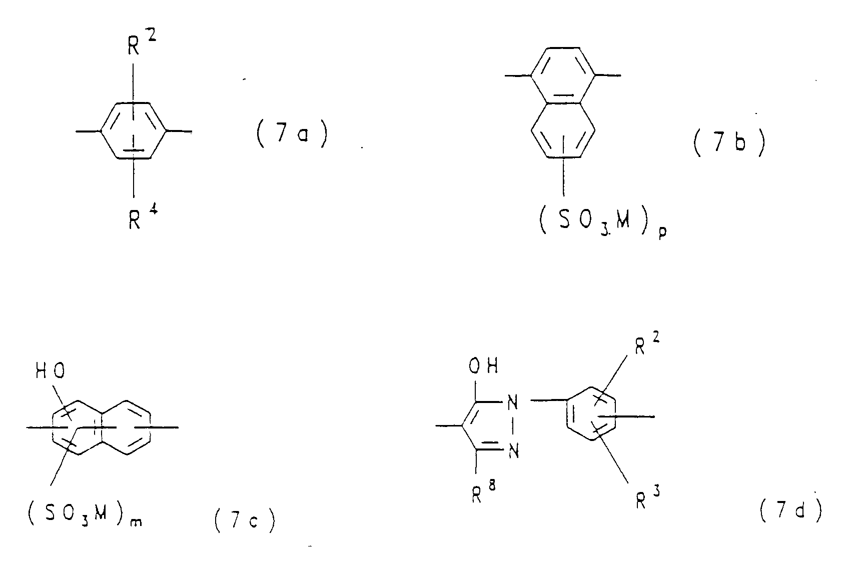 in which
R², R³, M and p have the meanings given in the foregoing,
R⁴ is a hydrogen atom, an alkyl group having 1 to 4 C atoms, an alkoxy group having 1 to 4 C atoms, a chlorine atom, an alkanoylamino group having 2 to 5 C atoms, the benzoylamino group, the ureido group, a N'-phenylureido group, a N'-alkylureido group having 1 to 4 C atoms in the alkyl radical, a phenylsulfonyl group or an alkylsulfonyl group having 1 to 4 C atoms,
m represents the number 1 or 2 and
R⁸ possesses one of the meanings given later;
-K*-Z is a radical having the general formula (8a), (8b), (8c), (8d), (8e) or (8f) 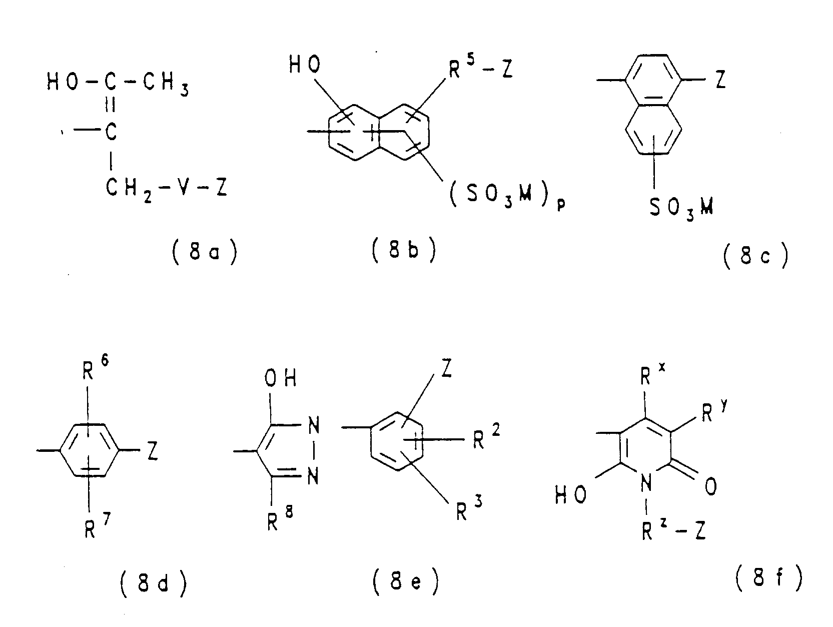 in which
R¹, R², R³, Z, p and M have the meanings given in the foregoing and the hydroxy group in formula (8b) is in the ortho position relative to the free bond which is linked to the azo group,
V is a phenylene radical which contains the above-mentioned and defined substituents R² and R³ or is a naphthylene radical which can be substituted by 1 or 2 sulfo groups,
R⁵ is a direct bond or a radical having the formula -NH-CO-phenylene-, -NH-CO-NH- phenylene, -N(CH₃)-CO-phenylene or -N(CH₃)-CO-NH-phenylene,
R⁶ is hydrogen, alkyl having 1 to 4 C atoms, alkoxy having 1 to 4 C atoms, bromine, chlorine or alkanoylamino having 2 to 7 C atoms,
R⁷ is hydrogen, alkyl having 1 to 4 C atoms, alkoxy having 1 to 4 C atoms, alkanoylamino having 2 to 7 atoms or a ureido or phenylureido group,
R⁸ is hydrogen, alkyl having 1 to 4 C atoms, cyano, carboxy, carbalkoxy having 2 to 5 C atoms, carbonamido or phenyl,
R^{x} is a hydrogen or alkyl group having 1 to 4 C atoms, or an alkyl group having 1 to 4 C atoms substituted by alkoxy having 1 to 4 C atoms or by cyano,
R^{y} is a hydrogen atom, a sulfo group or a sulfoalkyl group with an alkylene radical having 1 to 4 C atoms or a cyano or carbamoyl group, and
R^{z} is an alkylene group having 1 to 6 C atoms or a phenylene radical that can be substituted by substituents from the group comprising methyl, ethyl, chlorine, carboxy and sulfo, or is an alkylenephenylene radical with 2 to 4 C atoms in the alkylene radical;
D* is a phenylene radical that can be substituted by 1 or 2 substituents from the group comprising methyl, ethyl, methoxy, bromine, chlorine, carboxy and sulfo, or is a naphthylene radical that can be substituted by 1 or 2 sulfo groups;
K¹ is a radical having the general formula (9a), (9b) or (9c) 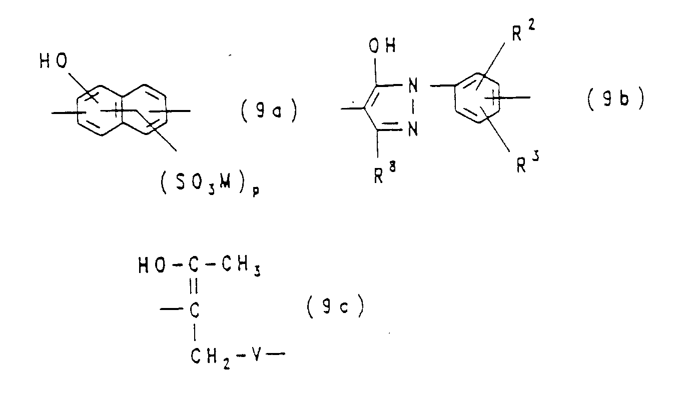 in which M, p, V, R², R³ and R⁸ have the above-named meanings and the hydroxy group in formula (9a) is in the ortho position relative to the free bond that is linked to the azo group, characterized by the fact that the diazo components having the formulae Y-SO₂-X¹-D°-NH₂ or H₂N-D°-X²-SO₂-Y and Z-D°-NH₂ and seen from the formulae (3c) to be dye starting products or the diazo components having the formulae Y-SO₂-X¹-D¹-NH₂ or Z-D*-NH₂ and seen from the formulae (5a) and (5c) to be dye starting products, are reacted in the form of their diazonium salts with the other dye components seen from the formulae (3c), (5a) and (5c) (diazotizable coupling components or pure coupling components) in the usual manner employed in the synthesis of disazo dyes, or by the fact that a cyanuric halogenide is reacted in any order with a compound having the general formula (15) and with an amino compound having the general formula (16) 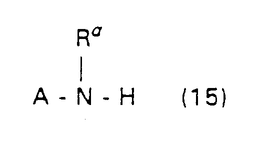
H-Q (16)
in which R^{α} and Q have the meaning stated in the foregoing and A is a radical having the formula (15A-1), (15A-2), (15B) or (15C) 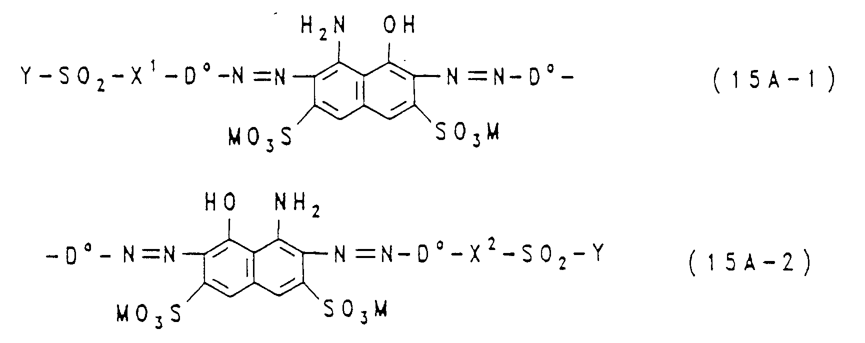
Y-SO₂-X¹-D¹-N=N-E¹-N=N-K*- (15B)
-D*-N=N-E¹-N=N-K¹-X²-SO₂-Y (15C)
in which D°, M, Y, X¹, X², D¹, E¹, K*, D* and K¹ have one of the meanings stated in the foregoing.

2. Process in accordance with Claim 1, characterized by the fact that an amino compound having the general formula (15) is reacted with a cyanuric halogenide to form a halogen triazinylamino compound having the general formula (17) 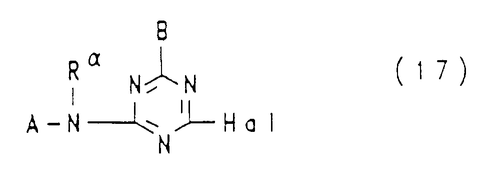 in which Hal is a halogen atom and A, B and R^{α} have the meanings stated in Claim 1 and this is converted in equivalent amount by reaction with an amino compound having the general formula (16) into the end dye having the formula (3c-1), (3c-2), (5a) or (5c), or that an amino compound having the general formula (16) is first reacted with a cyanuric halogenide to yield a halogen triazinylamino compound having the general formula (18) 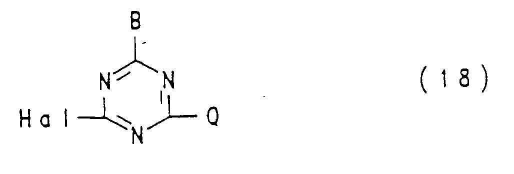 where Hal, B and Q have the meanings stated in the foregoing or in Claim 1 and this is reacted in equivalent amount with a compound having the general formula (15) to yield the end dye having the general formula (3c-1), (3c-2), (5a) or (5c).

3. Process in accordance with Claim 1 or 2, characterized by the fact that X¹ is a group having the formula -(CH₂)₃-CO-NH- or is a direct bond.

4. Process in accordance with at least one of the Claims 1 to 3, characterized by the fact that Z is a group having the formula -NH-Z¹, in which Z¹ is a group having the general formula (4a) 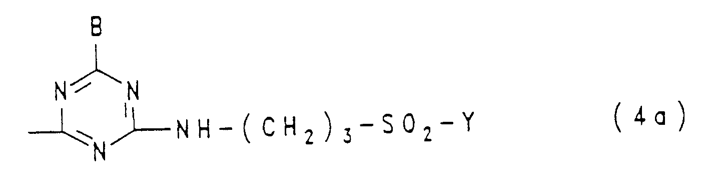 in which B and Y have the meanings given in Claim 1.

5. Process in accordance with at least one of the Claims 1 to 4, characterized by the fact that B is a chlorine or fluorine atom.

6. Process in accordance with at least one of the Claims 1, 2, 3 and 5, characterized by the fact that X together with the N atom represents the piperazine-1,4-ylene or piperidinylene radical.

7. Process in accordance with at least one of the Claims 1, 2, 3 and 5, characterized by the fact that R is the methyl or ethyl group or, preferably, a hydrogen atom.

8. Process in accordance with at least one of the Claims 1, 2, 3 and 5 to 7, characterized by the fact that R^{α} is a hydrogen atom.

9. Process in accordance with at least one of the Claims 1 to 8, characterized by the fact that Y is the vinyl group or, preferably, a β-sulfacoethyl or β-chloroethyl group.

10. Process in accordance with Claim 1 or 2, characterized by the fact that the synthesized dye is a compound corresponding to the general formula (10) 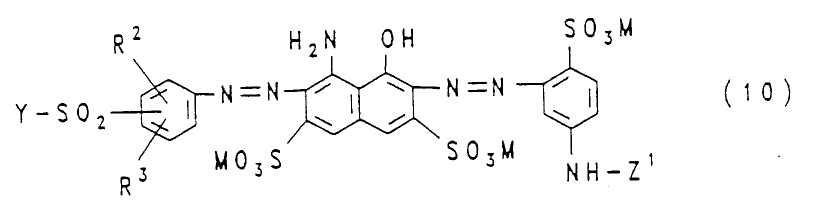 in which
R² is a hydrogen atom or a sulfo, carboxy, methoxy, ethoxy or methyl group,
R³ is a hydrogen atom or a methoxy, ethoxy or methyl group,
Y has the meaning stated in Claim 1 and is preferably the β-sulfatoethyl group,
M represents a hydrogen atom or an alkali metal and
Z¹ is a group having the general formula 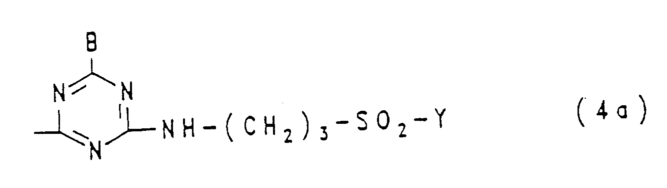 in which
B has the meaning stated in Claim 1 and is preferably a chlorine or fluorine atom and
Y is a β-sulfatoethyl or β-chloroethyl group.

11. Process in accordance with Claim 1 or 2, characterized by the fact that the synthesized dye is a compound corresponding to the general formula (11) 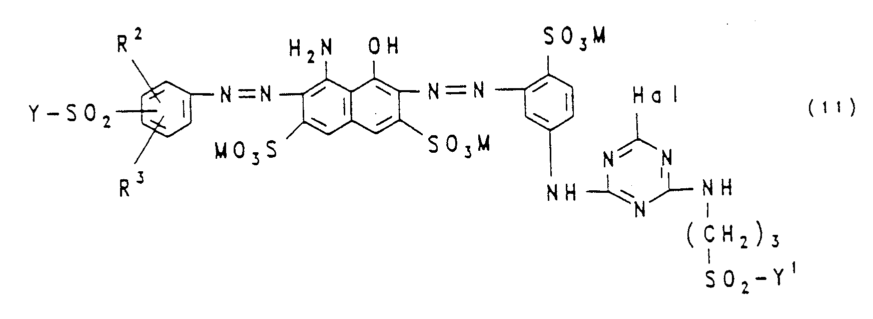 in which
R² is a hydrogen atom or a sulfo, carboxy, methoxy or ethoxy or methyl group
R³ is a hydrogen atom or a methoxy, ethoxy, or methyl group,
Y has the meaning stated in Claim 1 and is preferably the β-sulfatoethyl group,
M represents a hydrogen atom or an alkali metal,
Hal is a chlorine atom or preferably a fluorine atom and
Y¹ is the β-sulfatoethyl or preferably the β-chloroethyl group.

12. Process for the colouring (dyeing, including printing) of material, preferably fibre material, containing hydroxy and/or carbonamide groups, in which a dye is applied to the material or introduced into the material and the dye is fixed on or in the material by means of heat and with the aid of an alkaline agent, characterized by the fact that the dye used is a dye from at least one of the Claims 1 to 11.

## Revendications (Revendications pour l'(les) Etat(s) contractant(s) suivant(s): DE, GB, FR, IT, CH, LI, BE)

1. Colorant de formules générales (3c-1), (3c-2), (5a) et (5c) : 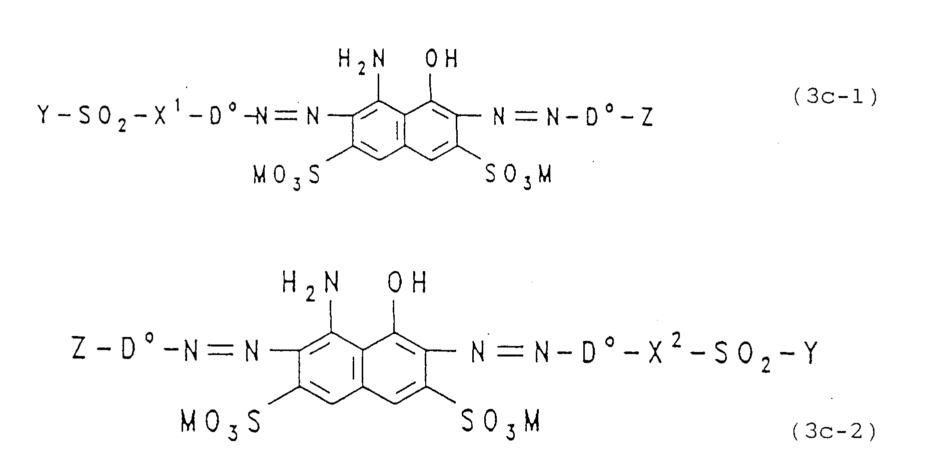
Y-SO₂-X¹-D¹-N=N-E¹-N=N-K*-Z (5a)
Z-D*-N=N-E¹-N=N-K¹-X²-SO₂-Y (5c)
où :
Y est le groupe vinyle ou encore un groupe β-sulfatoéthyle, β-halogénoéchyle, β-thiosulfatoéthyle, β-phosphatoéthyle ou β-acétoxyéthyle ;
Z est un résidu de formule générale (4) : 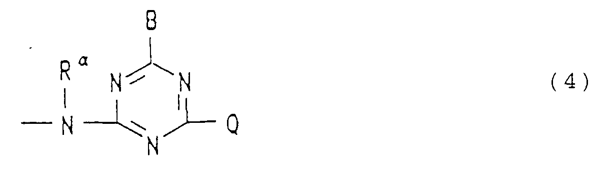 dans laquelle :
R^{α} est un atome d'hydrogène ou un groupe alkyle à chaîne droite ou ramifiée ayant de 1 à 4 atomes de carbone et pouvant être substitué par un groupe carboxy, sulfo, cyano ou hydroxy, ou par un atome de chlore ;
B est le fluor, le chlore, le brome ou un radical alkylsulfonyle ayant de 1 à 4 atomes de carbone, phénylsulfonyle, méthoxy ou sulfo ;
Q est un groupe de formule générale (2a) ou (2b) : 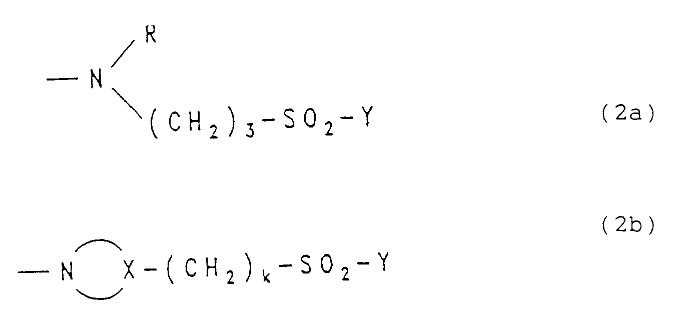 où :
R est un atome d'hydrogène ou un groupe alkyle ayant de 1 à 4 atomes de carbone,
Y a l'une des significations données ci-dessus,
k vaut 0, 1, 2, 3 ou 4, et
X avec l'atome d'azote et 1 ou 2 groupes alkylène ayant de 1 à 5 atomes de carbone et éventuellement 1 ou 2 hétéroatomes, forme le résidu divalent d'un noyau hétérocyclique ;
M est un atome d'hydrogène ou un métal alcalin ;
X¹ est une liaison directe ou un groupe alkylène ayant de 1 à 4 atomes de carbone ou encore le résidu divalent d'un groupe alcanoylamido ayant de 2 à 5 atomes de carbone ;
X² a l'une des significations données pour X¹ ;
D⁰ est un radical de formule générale (6a), (6b) ou (6c) 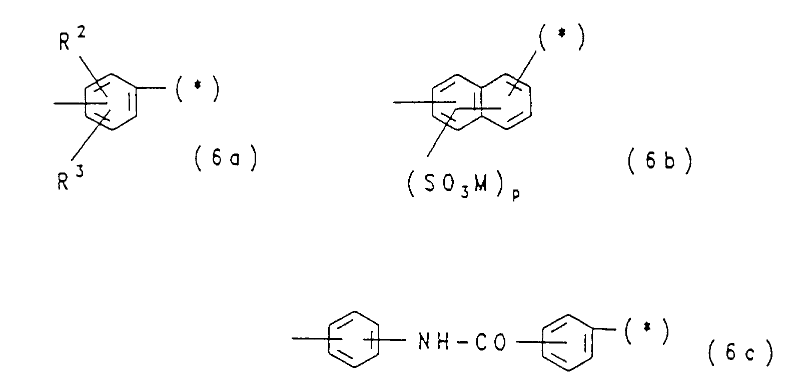 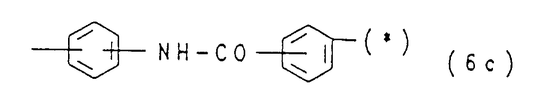 où :
la liaison marquée d'un astérisque conduit au groupe azo,
R² est un hydrogène ou un groupe méthyle, éthyle, méthoxy, éthoxy, alcanoyle ayant de 2 à 5 atomes de carbone, cyano, carboxy, sulfo, alooxycarbonyle ayant de 2 à 5 atomes de carbone, carbamoyle, N-(alkyl en C₁-C₄)-carbamoyle, fluoro, chloro, bromo ou trifluorométhyle,
R³ est un hydrogène ou un radical méthyle, éthyle, méthoxy, éthoxy, cyano, carboxy, sulfo, alcanoylamino ayant de 2 à 5 atomes de carbone, alcoxycarbonyle ayant de 2 à 5 atomes de carbone, carbamoyle, N-(alkyl en C₁-C₄)-carbamoyle, fluoro, chloro, nitro, sulfamoyle, N-(alkyl en C₁-C₄)-sulfamoyle, alkylsulfonyle ayant de 1 à 4 atomes de carbone, phénylsulfonyle ou phénoxy,
p vaut 0, 1 ou 2 (ce groupe, quand p vaut 0, étant un atome d'hydrogène), et
M a les significations données ci-dessus ;
D¹ est un radical phénylène qui comprend les substituants R² et R³ définis et mentionnés ci-dessus, ou encore représente un radical naphtylène pouvant être substitué par un ou deux groupes sulfo ;
E¹ est un radical de formule générale (7a), (7b), (7c) ou (7d) 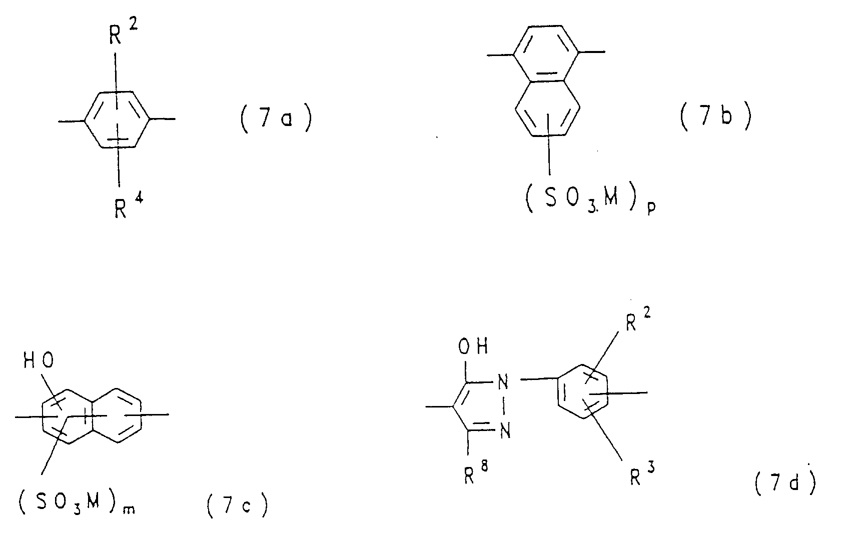 où :
R², R³, M et p ont les significations données ci-dessus,
R⁴ est un atome d'hydrogène, un groupe alkyle ayant de 1 à 4 atomes de carbone, un groupe alcoxy ayant de 1 à 4 atomes de carbone, un atome de chlore, un groupe alcanoylamino ayant de 2 à 5 atomes de carbone, le groupe benzoylamino, le groupe uréido, un groupe N'-phényl-uréido, un groupe N'-alkyl-uréido ayant de 1 à 4 atomes de carbone dans le fragment alkyle, un groupe phénylsulfonyle ou un groupe alkylsulfonyle ayant de 1 à 4 atomes de carbone,
m vaut 1 ou 2, et
R⁸ a l'une des significations données ci-après ;
-K*-Z est un radical de formule générale (8a), (8b), (8c), (8d), (8e) ou (8f) : 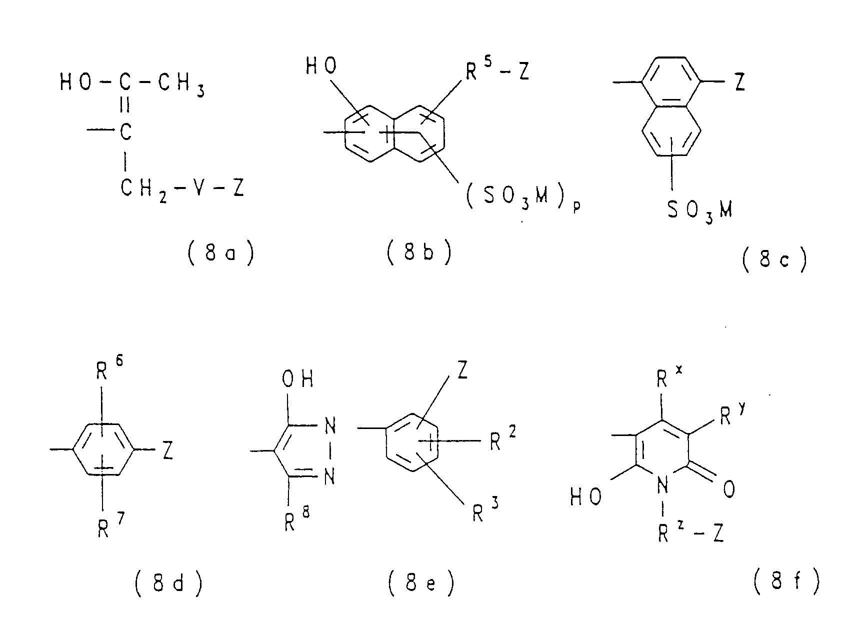 où :
R¹, R², R³, Z, p et M ont les significations données ci-dessus, et le groupe hydroxy de la formule (8b) est en position ortho par rapport à la liaison libre reliée au groupe azo,
V est un radical phénylène contenant les substituants R² et R³ mentionnés et définis ci-dessus, ou encore un groupe naphtylène pouvant être substitué par un ou deux groupes sulfo,
R⁵ est une liaison directe ou un radical de formule -NH-CO-phénylène-, -NH-CO-NH-phénylène, -N(CH₃)-CO-phénylène ou -N(CH₃)-CO-NH-phénylène-,
R⁶ est un hydrogène ou un radical alkyle ayant de 1 à 4 atomes de carbone, alcoxy ayant de 1 à 4 atomes de carbone, brome, chloro ou alcanoylamino ayant de 2 à 7 atomes de carbone,
R⁷ est un hydrogène ou un radical alkyle ayant de 1 à 4 atomes de carbone, alcoxy ayant de 1 à 4 atomes de carbone, alcanoylamino ayant de 2 à 7 atomes de carbone, ou encore un groupe uréido ou phényluréido,
R⁸ est un hydrogène ou un radical alkyle ayant de 1 à 4 atomes de carbone, cyano, carboxy, carbalcoxy ayant de 2 à 5 atomes de carbone, carboxamido ou phényle,
R^{x} est un atome d'hydrogène ou un groupe alkyle ayant de 1 à 4 atomes de carbone ou encore un groupe alkyle ayant de 1 à 4 atomes de carbone substitué par des substituants alcoxy ayant de 1 à 4 atomes de carbone ou cyano,
R^{y} est un atome d'hydrogène, un groupe sulfo ou un groupe sulfoalkyle comportant un radical alkylène ayant de 1 à 4 atomes de carbone, ou encore représente un groupe cyano ou carbamoyle, et
R^{z} est un groupe alkylène ayant de 1 à 6 atomes de carbone, ou un radical phénylène pouvant être substitué par des substituants choisis dans l'ensemble constitué par les radicaux méthyle, éthyle, chloro, carboxy et sulfo, ou encore représente un radical alkylènephénylène ayant de 2 à 4 atomes de carbone dans le fragment alkylène ;
D* est un radical phénylène pouvant être substitué par 1 ou 2 substituants choisis dans l'ensemble constitué par les radicaux méthyle, éthyle, méthoxy, bromo, chloro, carboxy et sulfo, ou bien représente un radical naphtylène pouvant être substitué par 1 ou 2 groupes sulfo ;
K¹ est un radical de formule générale (9a), (9b) ou (9c) : 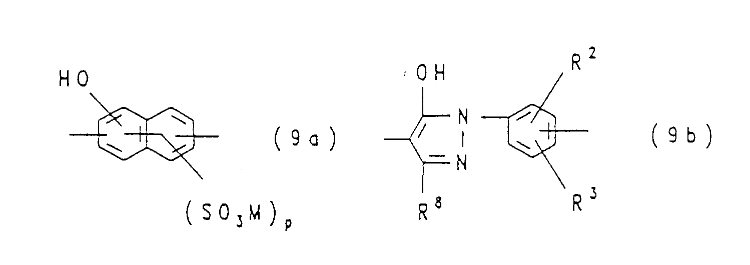 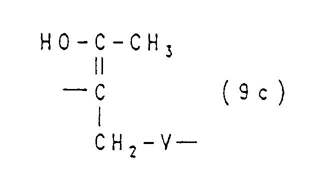 où M, p, V, R², R³ et R⁸ ont les significations données ci-dessus, et le groupe hydroxy de la formule (9a) est en position ortho par rapport à la liaison libre reliée au groupe azo.

2. Colorant selon la revendication 1, caractérisé en ce que X¹ est un groupe de formule -(CH₂)₃-CO-NH- ou une liaison directe, et X² est un groupe de formule -NH-CO-(CH₂)₃- ou une liaison directe.

3. Colorant selon la revendication 1 ou 2, caractérisé en ce que Z est un groupe de formule -NH-Z¹, où Z¹ est un groupe de formule générale (4a) : 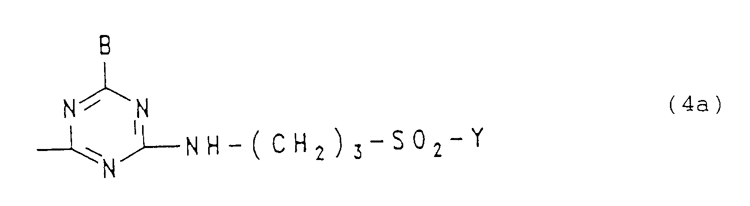 dans laquelle B et Y ont les significations données dans la revendication 1.

4. Colorant selon au moins l'une des revendications 1 à 3, caractérisé en ce que B est un atome de chlore ou de fluor.

5. Colorant selon au moins l'une des revendications 1, 2 et 4, caractérisé en ce que X, avec l'atome d'azote, représente le radical pipérazine-1,4-ylène ou pipéridinyléne.

6. Colorant selon au moins l'une des revendications 1, 2 et 4, caractérisé en ce que R est le groupe méthyle ou éthyle ou de préférence un atome d'hydrogène.

7. Colorant selon au moins l'une des revendications 1, 2 et 4 à 6, caractérisé en ce que R^{α} est un atome d'hydrogène.

8. Colorant selon au moins l'une des revendications 1 à 7, caractérisé en ce que Y est le groupe vinyle ou de préférence un groupe β-sulfatoéthyle ou β-chloroéthyle.

9. Colorant selon la revendication 1, caractérisé en ce que le colorant est un composé de formule générale (10) : 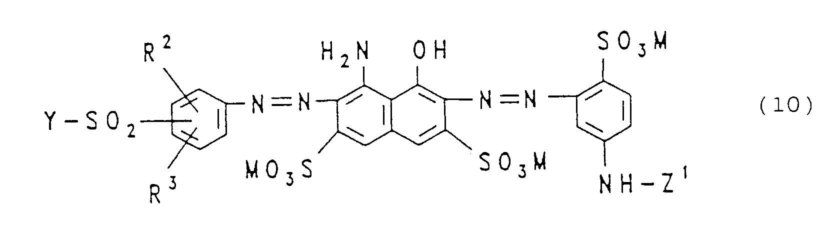 dans laquelle :
R² est un atome d'hydrogène ou un groupe sulfo, carboxy, méthoxy, éthoxy ou méthyle,
R³ est un atome d'hydrogène ou un groupe méthoxy, éthoxy ou méthyle,
Y a les significations données dans la revendication 1 et représente de préférence le groupe β-sulfatoéthyle,
M est un atome d'hydrogène ou un métal alcalin, et
Z¹ est un groupe de formule générale : 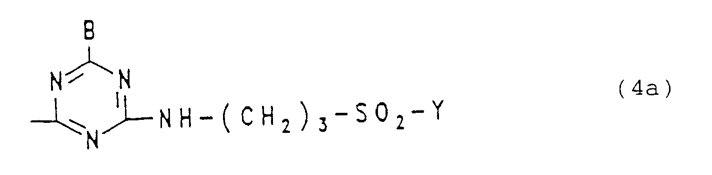 dans laquelle
B a les significations données dans la revendication 1 et représente de préférence un atome de chlore ou de fluor, et
Y est un groupe β-sulfatoéthyle ou β-chloroéthyle.

10. Colorant selon la revendication 1, caractérisé en ce que le colorant est un composé de formule générale (11) : 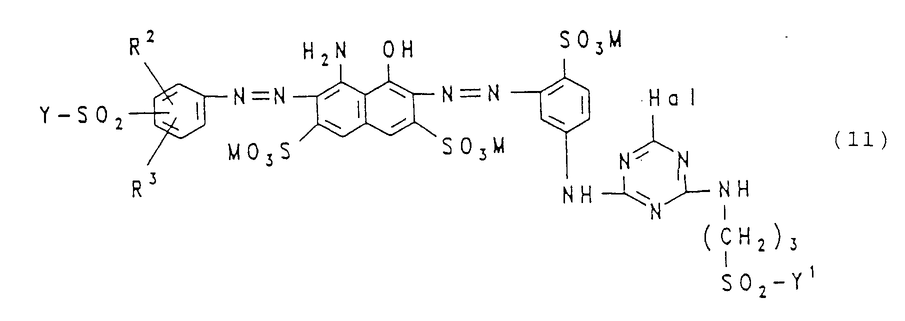 dans laquelle
R² est un atome d'hydrogène ou un groupe sulfo, carboxy, méthoxy, éthoxy ou méthyl,
R³ est un atome d'hydrogène ou un groupe méthoxy, éthoxy ou méthyle,
Y a les significations données dans la revendication 1 et représente de préférence le groupe β-sulfatoéthyle,
M est un atome d'hydrogène ou un métal alcalin,
Hal est un atome de chlore ou de préférence un atome de fluor, et
Y¹ est le groupe β-sulfatoéthyle ou de préférence le groupe β-chloroéthyle.

11. Procédé pour préparer un colorant de formule générale (1) mentionné et défini dans la revendication 1, caractérisé en ce qu'on fait réagir les composants de diazotation qui d'après les formules (3c) sont des précurseurs de colorants, de formule Y-SO₂-X¹-D⁰-NH₂ ou H₂N-D⁰-X²-SO₂-Y et Z-D⁰-NH₂, ou encore les composants de diazotation qui d'après les formules (5a) ou (5c) sont des précurseurs de colorants, ayant les formules Y-SO₂-X¹-D¹-NH₂ ou Z-D*-NH₂, sous forme de leurs sels de diazonium, avec les autres composants colorants ressortant des formules (3c), (5a) ou (5c) (composants de copulation diazotables ou composants de copulation purs), et ce de la manière couramment utilisée pour la synthèse des colorants disazoïques,
ou en ce qu'on fait réagir dans un ordre quelconque un halogénure de cyanuryle avec un composé de formule générale (15) et avec un composé aminé de formule générale (16) : 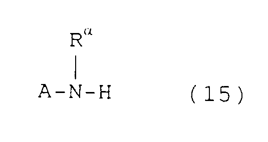
H-Q (16)
dans lesquelles R^{α} et Q ont les significations données dans la revendication 1, et A est un radical de formule (15A-1), (15A-2), (15B) ou (15C) : 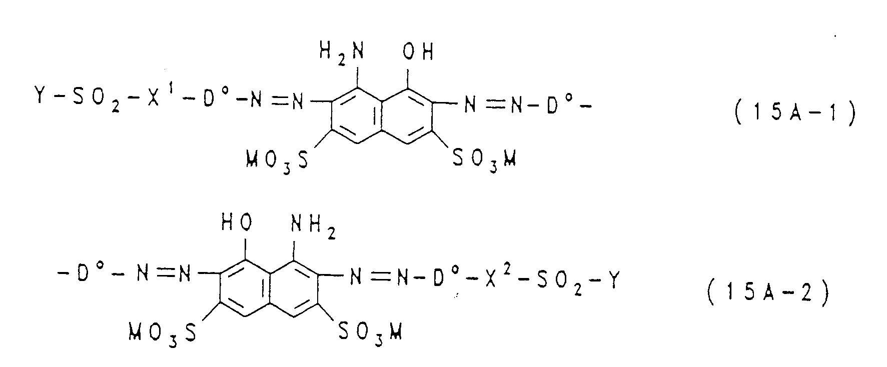
Y-SO₂-X¹-D¹-N=N-E¹-N=N-K*- (15B)
-D*-N=N-E¹-N=N-K¹-X²-SO₂-Y (15C)
où D⁰, M, Y, X¹, X², D¹, E¹, K*, D* et K¹ ont l'une des significations données dans la revendication 1.

12. Procédé selon la revendication 11, caractérisé en ce qu'on fait réagir un composé aminé de formule générale (15) avec un halogénure de cyanuryle, pour obtenir un composé halogénotriazinylaminé de formule générale (17) : 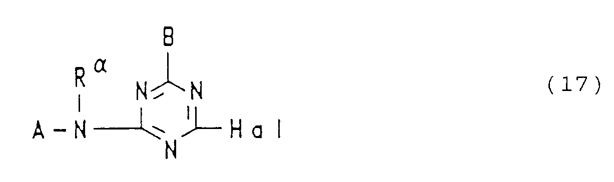 dans laquelle Hal est un atome de chlore ou de fluor, B et R^{α} ont les significations données dans la revendication 1 et A les significations données dans la revendication 11, et que l'on convertit ce composé, par réaction avec un composé aminé de formule générale (16) en quantité équivalente, en le colorant final de formule (3c-1), (3c-2), (5a) ou (5c), ou encore que l'on fait réagir d'abord un composé aminé de formule générale (16) avec un halogénure de cyanuryle pour obtenir un composé halogénotriazinylaminé de formule générale (18) : 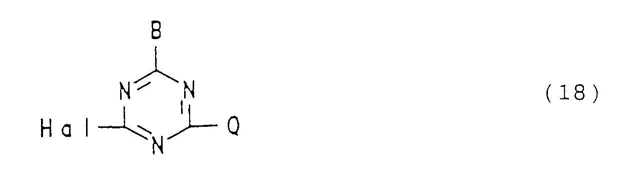 où Hal, B et Q ont les significations données ci-dessus ou dans la revendication 1, et que l'on fait réagir ce composé en quantité équivalente avec un composé de formule générale (15) pour obtenir le colorant final de formule générale (3c-1), (3c-2), (5a) ou (5c).

13. Utilisation d'un colorant selon au moins l'une des revendications 1 à 10 pour teindre et imprimer un matériau contenant des groupes hydroxy et/ou carboxamido, notamment un matériau fibreux.

14. Procédé pour colorer (teindre, y compris imprimer) un matériau contenant des groupes hydroxy et/ou carboxamido, de préférence un matériau fibreux, dans lequel on applique un colorant sur le matériau ou dans le matériau, et on fixe le colorant sur ou dans le matériau, par application de chaleur, ou à l'aide d'un agent à effet alcalin, ou encore par application de chaleur et à l'aide d'un agent alcalin, caractérisé en ce qu'on utilise comme colorant un colorant selon au moins l'une des revendications 1 à 10.

## Revendications (Revendications pour l'(les) Etat(s) contractant(s) suivant(s): ES)

1. Procédé pour préparer un colorant de formules générales (3c-1), (3c-2), (5a) et (5c) : 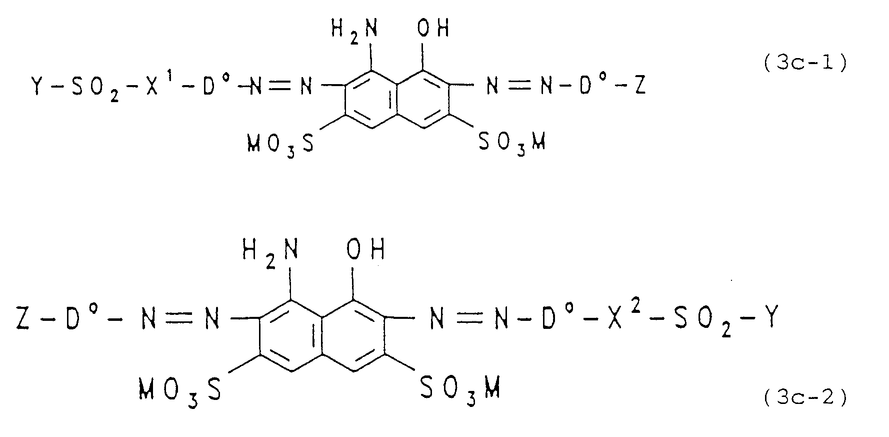
Y-SO₂-X¹-D¹-N=N-E¹-N=N-K*-Z (5a)
Z-D*-N=N-E¹-N=N-K¹-X²-SO₂-Y (5c)
où :
Y est le groupe vinyle ou encore un groupe β-sulfatoéthyle, β-halogénoéthyle, β-thiosulfatoéthyle, β-phosphatoéthyle ou β-acétoxyéthyle ;
Z est un résidu de formule générale (4) : 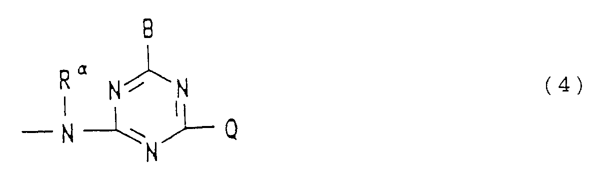 dans laquelle :
R^{α} est un atome d'hydrogène ou un groupe alkyle à chaîne droite ou ramifiée ayant de 1 à 4 atomes de carbone et pouvant être substitué par un groupe carboxy, sulfo, cyano ou hydroxy, ou par un atome de chlore ;
B est le fluor, le chlore, le brome ou un radical alkylsulfonyle ayant de 1 à 4 atomes de carbone, phénylsulfonyle, méthoxy ou sulfo ;
Q est un groupe de formule générale (2a) ou (2b) : 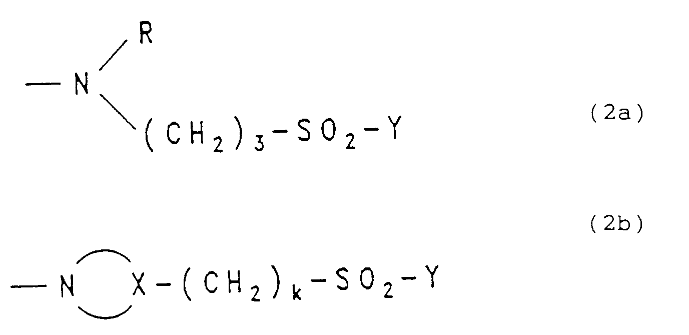 où :
R est un atome d'hydrogène ou un groupe alkyle ayant de 1 à 4 atomes de carbone,
Y a l'une des significations données ci-dessus,
k vaut 0, 1, 2, 3 ou 4, et
X avec I'atome d'azote et 1 ou 2 groupes alkylène ayant de 1 à 5 atomes de carbone et éventuellement 1 ou 2 hétéroatomes, forme le résidu divalent d'un noyau hétérocyclique ;
M est un atome d'hydrogène ou un métal alcalin ;
X¹ est une liaison directe ou un groupe alkylène ayant de 1 à 4 atomes de carbone ou encore le résidu divalent d'un groupe alcanoylamido ayant de 2 à 5 atomes de carbone ;
X² a l'une des significations données pour X¹ ;
D⁰ est un radical de formule générale (6a), (6b) ou (6c) 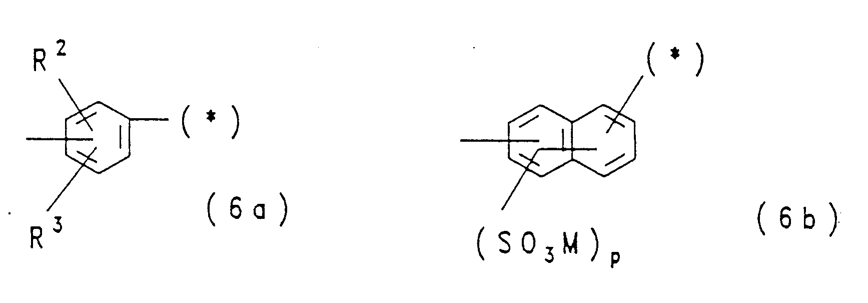 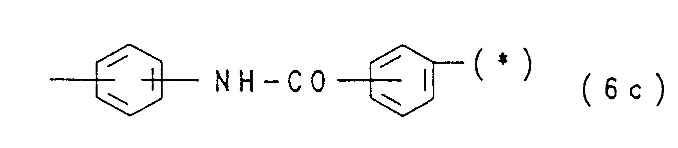 où :
la liaison marquée d'un astérisque conduit au groupe azo,
R² est un hydrogène ou un groupe méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyl en C₁-C₄)-carbamoyle, fluoro, chloro, brome ou trifluorométhyle,
R³ est un hydrogène ou un radical méthyle, éthyle, méthoxy, éthoxy, cyano, carboxy, sulfo, alcanoylamino ayant de 2 à 5 atomes de carbone, alcoxycarbonyle ayant de 2 à 5 atomes de carbone, carbamoyle, N-(alkyl en C₁-C₄)-carbamoyle, fluoro, chloro, nitro, sulfamoyle, N-(alkyl en C₁-C₄)-sulfamoyle, alkylsulfonyle ayant de 1 à 4 atomes de carbone, phénylsulfonyle ou phénoxy,
p vaut 0, 1 ou 2 (ce groupe, quand p vaut 0, étant un atome d'hydrogène), et
M a les significations données ci-dessus ;
D¹ est un radical phénylène qui comprend les substituants R² et R³ définis et mentionnés ci-dessus, ou encore représente un radical naphtylène pouvant être substituté par un ou deux groupes sulfo ;
E¹ est un radical de formule générale (7a), (7b), (7c) ou (7d) 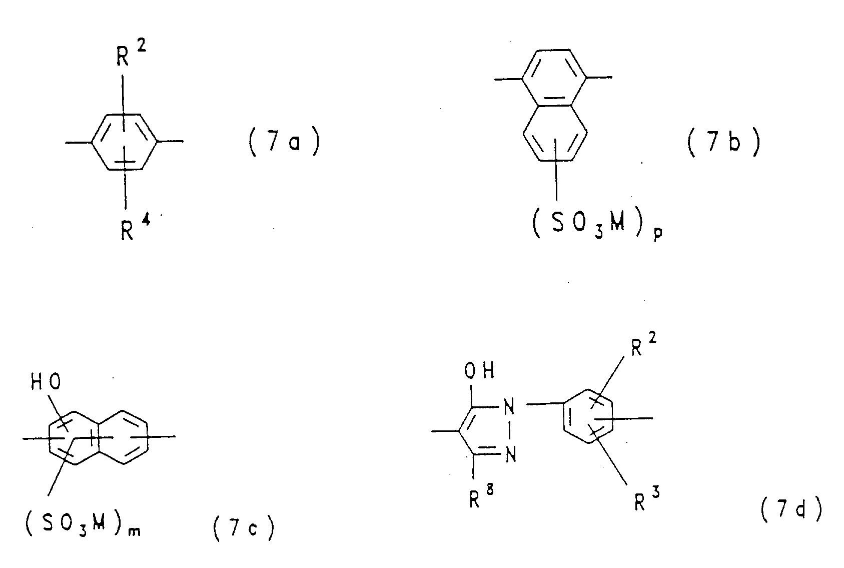 où :
R², R³, M et p ont les significations données ci-dessus,
R⁴ est un atome d'hydrogène, un groupe alkyle ayant de 1 à 4 atomes de carbone, un groupe alcoxy ayant de 1 à 4 atomes de carbone, un atome de chlore, un groupe alcanoylamino ayant de 2 à 5 atomes de carbone, le groupe benzoylamino, le groupe uréido, un groupe N'-phényl-uréido, un groupe N'-alkyl-uréido ayant de 1 à 4 atomes de carbone dans le fragment alkyle, un groupe phénylsulfonyle ou un groupe alkylsulfonyle ayant de 1 à 4 atomes de carbone,
m vaut 1 ou 2, et
R⁸ a l'une des significations données ci-après ;
-K*-Z est un radical de formule générale (8a), (8b), (8c), (8d), (8e) ou (8f) : 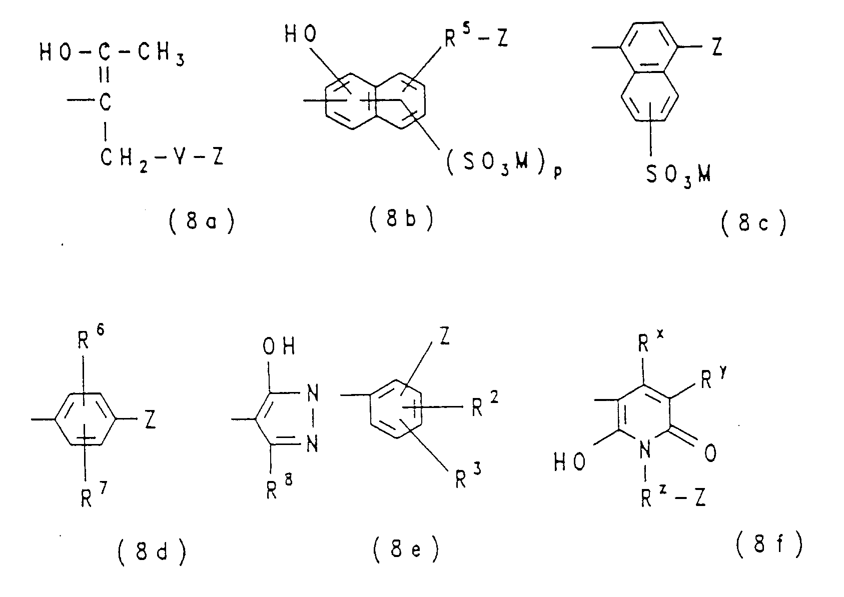 où :
R¹, R², R³, Z, p et M ont les significations données ci-dessus, et le groupe hydroxy de la formule (8b) est en position ortho par rapport à la liaison libre reliée au groupe azo,
V est un radical phénylène contenant les substituants R² et R³ mentionnés et définis ci-dessus, ou encore un groupe naphtylène pouvant être substitué par un ou deux groupes sulfo,
R⁵ est une liaison directe ou un radical de formule -NH-CO-phénylène-, -NH-CO-NH-phénylène-, -N(CH₃)-CO-phénylène- ou -N(CH₃)-CO-NH-phénylène-,
R⁶ est un hydrogène ou un radical alkyle ayant de 1 à 4 atomes de carbone, alcoxy ayant de 1 à 4 atomes de carbone, bromo, chloro ou alcanoylamino ayant de 2 à 7 atomes de carbone,
R⁷ est un hydrogène ou un radical alkyle ayant de 1 à 4 atomes de carbone, alcoxy ayant de 1 à 4 atomes de carbone, alcanoylamino ayant de 2 à 7 atomes de carbone, ou encore un groupe uréido ou phényluréido,
R⁸ est un hydrogène ou un radical alkyle ayant de 1 à 4 atomes de carbone, cyano, carboxy, carbalcoxy ayant de 2 à 5 atomes de carbone, carboxamido ou phényle,
R^{x} est un atome d'hydrogène ou un groupe alkyle ayant de 1 à 4 atomes de carbone ou encore un groupe alkyle ayant de 1 à 4 atomes de carbone substitué par des substituants alcoxy ayant de 1 à 4 atomes de carbone ou cyano,
R^{y} est un atome d'hydrogène, un groupe sulfo ou un groupe sulfoalkyle comportant un radical alkylène ayant de 1 à 4 atomes de carbone, ou encore représente un groupe cyano ou carbamoyle, et
R^{z} est un groupe alkylène ayant de 1 à 6 atomes de carbone, ou un radical phénylène pouvant être substitué par des substituants choisis dans l'ensemble constitué par les radicaux méthyle, éthyle, chloro, carboxy et sulfo, ou encore représente un radical alkylènephénylène ayant de 2 à 4 atomes de carbone dans le fragment alkylène ;
D* est un radical phénylène pouvant être substitué par 1 ou 2 substituants choisis dans l'ensemble constitué par les radicaux méthyle, éthyle, méthoxy, bromo, chloro, carboxy et sulfo, ou bien représente un radical naphtylène pouvant être substitué par 1 ou 2 groupes sulfo ;
K¹ est un radical de formule générale (9a), (9b) ou (9c) : 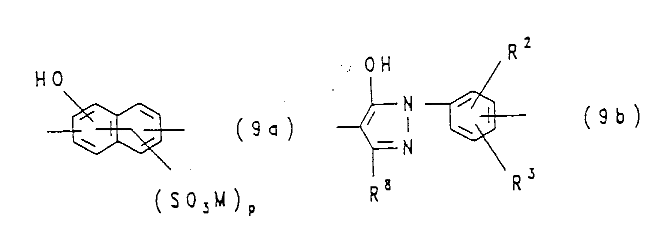 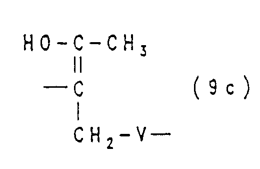 où M, p, V, R² R³ et R⁸ ont les significations données ci-dessus, et le groupe hydroxy de la formule (9a) est en position ortho par rapport à la liaison libre reliée au groupe azo,
caractérisé en ce qu'on fait réagir les composants de diazotation qui d'après les formules (3c) sont des précurseurs de colorants, de formule Y-SO₂-X¹-D⁰-NH₂ ou H₂N-D⁰-X²-SO₂-Y et Z-D⁰NH₂, ou encore les composants de diazotation qui d'après les formules (5a) ou (5c) sont des précurseurs de colorants ayant les formules Y-SO₂-X¹-D¹-NH₂ ou Z-D*-NH₂, sous forme de leurs sels de diazonium, avec les autres composants colorants ressortant des formules (3c), (5a) ou (5c) (composants de copulation diazotables ou composants de copulation purs), et ce de la manière couramment utilisée pour la synthèse des colorants disazoïques,
ou en ce qu'on fait réagir dans un ordre quelconque un halogénure de cyanuryle avec un composé de formule générale (15) et avec un composé aminé de formule générale (16) : 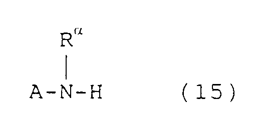
H-Q (16)
dans lesquelles R^{α} et Q ont les significations données ci-dessus et A est un radical de formule (15A-1), (15A-2), (15B) ou (15C) : 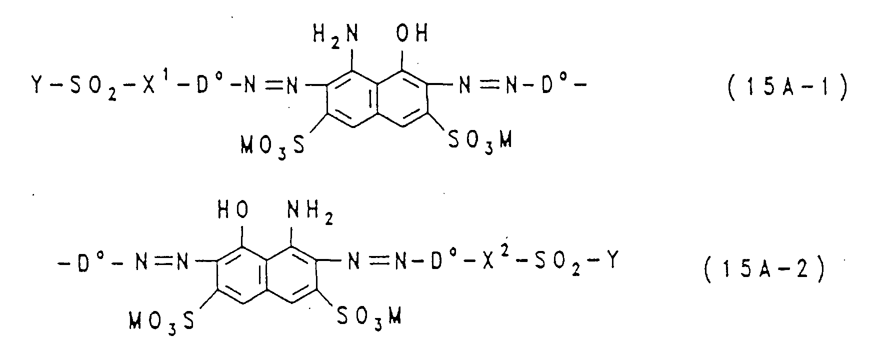
Y-SO₂-X¹-D¹-N=N-E¹-N=N-K*- (15B)
-D*-N=N-E¹-N=N-K¹-X²-SO₂-Y (15C)
où D⁰, M, Y, X¹, X², D¹, E¹, K*, D* et K¹ ont l'une des significations données ci-dessus.

2. Procédé selon la revendication 1, caractérise en ce qu'on fait réagir un composé aminé de formule générale (15) avec un halogénure de cyanuryle, pour obtenir un composé halogénotriazinylaminé de formule générale (17) : 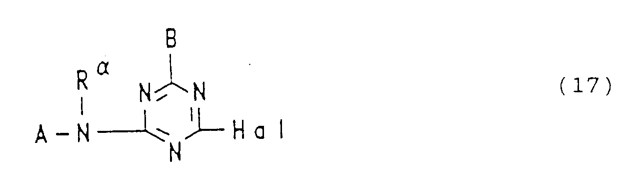 dans laquelle Hal est un atome d'halogène et A, B et R^{α} ont les significations données dans la revendication 1, et que l'on convertit ce composé, par réaction avec un composé aminé de formule générale (16) en quantité équivalente, en le colorant final de formule (3c-1), (3c-2), (5a) ou (5c), ou encore que l'on fait réagir d'abord un composé aminé de formule générale (16) avec un halogénure de cyanuryle pour obtenir un compose halogénotriazinylaminé de formule générale (18) : 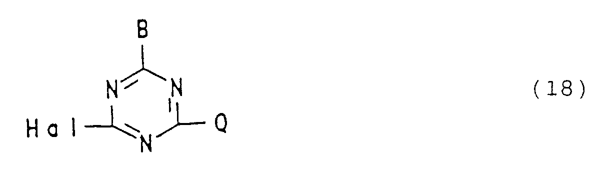 où Hal, B et Q ont les significations données ci-dessus ou dans la revendication 1, et que l'on fait réagir ce composé en quantité équivalente avec un composé de formule générale (15) pour obtenir le colorant final de formule générale (3c-1), (3c-2), (5a) ou (5c).

3. Procédé selon la revendication 1 ou 2, caractérisé en ce que X¹ est un groupe de formule -(CH₂)₃-CO-NH- ou une liaison directe.

4. Procédé selon au moins l'une des revendications 1 à 3, caractérisé en ce que Z est un groupe de formule -NH-Z¹ où Z¹ est un groupe de formule générale (4a) : 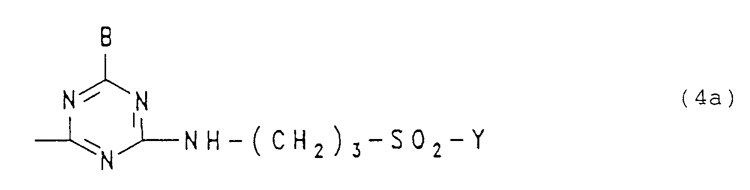 où B et Y ont les significations données dans la revendication 1.

5. Procédé selon au moins l'une des revendications 1 à 4, caractérisé en ce que B est un atome de chlore ou de fluor.

6. Procédé selon au moins l'une des revendications 1, 2, 3 et 5, caractérisé en ce que X, avec l'atome d'azote, représente le radical pipérazine-1,4-ylène ou pipéridinylène.

7. Procédé selon au moins l'une des revendications 1, 2, 3 et 5, caractérisé en ce que R est le groupe méthyle ou éthyle ou de préférence un atome d'hydrogène.

8. Procédé selon au moins l'une des revendications 1, 2, 3 et 5 à 7, caractérisé en ce que R^{α} est un atome d'hydrogène.

9. Procédé selon au moins l'une des revendications 1 à 8, caractérisé en ce que Y est le groupe vinyle ou de préférence un groupe β-sulfatoéthyle ou β-chloroéthyle.

10. Procédé selon la revendication 1 ou 2, caractérisé en ce que le colorant synthétisé est un composé de formule générale (10) : 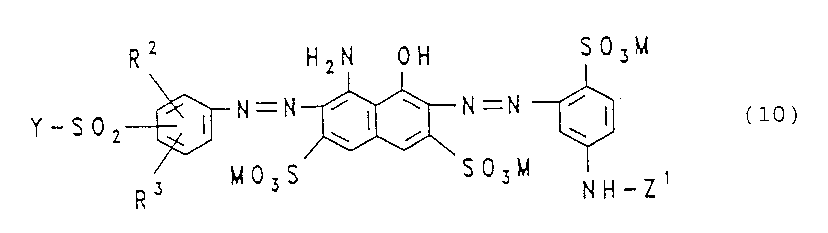 dans laquelle :
R² est un atome d'hydrogène ou un groupe sulfo, carboxy, méthoxy, éthoxy ou méthyle,
R³ est un atome d'hydrogène ou un groupe méthoxy, éthoxy ou méthyle,
Y a les significations données dans la revendication 1 et représente de préférence le groupe β-sulfatoéthyle,
M est un atome d'hydrogène ou un métal alcalin, et
Z¹ est un groupe de formule générale : 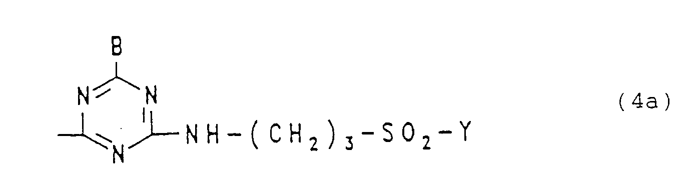 dans laquelle
B a les significations données dans la revendication 1 et représente de préférence un atome de chlore ou de fluor, et
Y est un groupe β-sulfatoéthyle ou β-chloroéthyle.

11. Procédé selon la revendication 1 ou 2, caractérisé en ce que le colorant synthétisé est un composé de formule générale (11) : 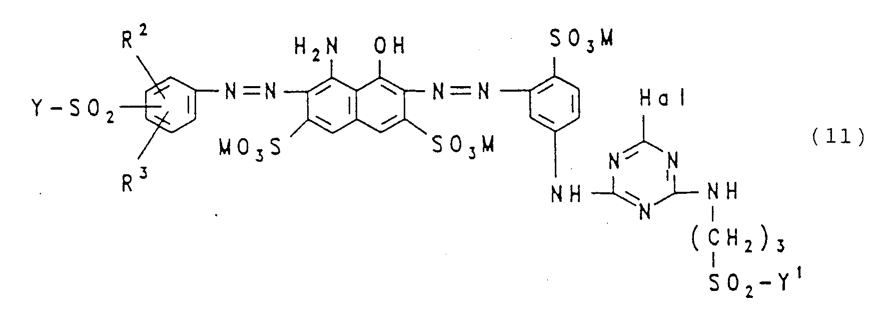 dans laquelle
R² est un atome d'hydrogène ou un groupe sulfo, carboxy, méthoxy, éthoxy ou méthyl,
R³ est un atome d'hydrogène ou un groupe méthoxy, éthoxy ou méthyle,
Y a les significations données dans la revendication 1 et représente de préférence le groupe β-sulfatoéthyle,
M est un atome d'hydrogène ou un métal alcalin,
Hal est un atome de chlore ou de préférence un atome de fluor, et
Y¹ est le groupe β-sulfatoéthyle ou de préférence le groupe β-chloroéthyle.

12. Procédé pour colorer (teindre, y comprise imprimer) un matériau contenant des groupes hydroxy et/ou carboxamido, de préférence un matériau fibreux, dans lequel on applique un colorant sur le matériau ou dans le matériau, et on fixe le colorant sur ou dans le matériau, par application de chaleur, ou à l'aide d'un agent à effet alcalin, ou encore par application de chaleur et à l'aide d'un agent alcalin, caractérisé en ce qu'on utilise comme colorant un colorant selon au moins l'une des revendications 1 à 11.
